# EUROPÄISCHE PATENTSCHRIFT

(11) **EP 3 012 199 B1**
(45) Veröffentlichungstag und Bekanntmachung des Hinweises auf die Patenterteilung: **31.01.2018**
(21) Anmeldenummer: 15189628.9
(22) Anmeldetag: 13.10.2015
(51) Int. Cl.: B65B 21/18, B65B 35/36, B65B 35/38, B65B 43/48, B65B 5/06, B65B 5/08, B65B 5/10, B65B 65/00, B65B 43/54, B65B 61/20

(54) **VORRICHTUNG UND VERFAHREN ZUM UMGANG MIT ARTIKELN**
DEVICE AND METHOD FOR HANDLING ITEMS
DISPOSITIF ET PROCEDE DE MANUTENTION D'ARTICLES

(30) Priorität: 20.10.2014 DE 102014221232
(43) Veröffentlichungstag der Anmeldung: 27.04.2016
(73) Patentinhaber: Krones Aktiengesellschaft, 93073 Neutraubling (DE)
(72) Erfinder: HUTTER, Alban, 93073 Neutraubling (DE); FECHTER, Wolfgang, 93073 Neutraubling (DE); HOFSTETTER, Roland, 93073 Neutraubling (DE)
(74) Vertreter: Benninger, Johannes

(56) Entgegenhaltungen:
- EP-A1- 1 410 995
- EP-A1- 1 544 113
- WO-A1-03/037723
- WO-A1-2013/010697
- WO-A2-2007/031238
- WO-A2-2010/003146
- DE-A1-102011 002 575
- US-A- 5 797 249
- US-A1- 2005 028 495

## Beschreibung

Die vorliegende Erfindung betrifft eine Vorrichtung zum Umgang mit Artikeln gemäß den Merkmalen des Oberbegriffes des Anspruchs 1 sowie ein Verfahren zum Umgang mit Artikeln gemäß den Merkmalen des Oberbegriffes des Anspruchs 12. Der Umgang mit Artikeln sieht häufig vor, einzelne oder mehrere Artikel mit einer Umverpackung, beispielsweise einer Kartonage, zu versehen.

Dies erfolgt im Falle einzelner Artikel zu deren verbessertem Schutz und/oder zu deren verbesserter Verkaufspräsentation.

Im Falle mehrerer Artikel wird durch die Umverpackung zusätzlich ein Gebinde aus mehreren Artikeln erhalten.

Gebinde stellen eine effektive Art dar, den gleichzeitigen Umgang mit mehreren Artikeln zu ermöglichen, beispielsweise um den Transport mehrerer Artikel zugleich zu erleichtern. Gebinde aus mehreren zusammengehaltenen Artikeln stellen daher für viele Artikel, wie beispielsweise Getränkebehälter, die häufigste Variante von Verkaufseinheiten dar.

Bei den Artikeln kann es sich beispielsweise um Objekte, wie etwa verpackte oder unverpackte Gegenstände, Kartonagen, Behälter, wie etwa Getränkeflaschen oder Dosen, oder selbst wiederum um Gebinde aus mehreren Objekten handeln, wobei die Objekte eines Gebindes beispielsweise vermittels einer eine Gruppe von Objekten an deren Peripherie umgebenden Umfassung, wie beispielsweise einer Umreifung, einer Umverpackung, wie etwa einer Umwickelung, einem Schrumpfschlauch oder einer Kartonage oder eines Tragegestells, wie etwa eines Getränkekastens, zusammengehalten werden können, um nur einige denkbare Ausgestaltungen zu nennen.

Werden mehrere Artikel in einer Umverpackung zusammengefasst, so können diese einzeln, einer nach dem anderen, oder gruppenweise, beispielsweise bereits entsprechend ihrer Anordnung oder entsprechend eines Teils ihrer Anordnung in der Umverpackung in diese eingesetzt werden.

Einen wesentlichen Kostenfaktor beim Umgang mit Artikeln, beispielsweise in der Lebensmittel- und/oder Getränke- und/oder Verpackungstechnik und/oder in der Lebensmittel- und/oder Getränke- und/oder Verpackungsindustrie, stellt die Taktung dar, mit der innerhalb möglichst kurzer Zeit mit möglichst vielen Artikeln umgegangen werden kann. Je höher die Taktung, desto höher ist dabei der Artikelumsatz und um so höher und damit besser ist die Auslastung der hierfür vorgesehenen Maschinen, Anlagen und Einrichtungen. Die Taktung kann somit als Quotient der Anzahl von Artikeln und der Zeitdauer, innerhalb der mit dieser Anzahl von Artikeln umgegangen wird, beschrieben werden.

Um hohe Taktungen erzielen zu können, werden in der Verpackungstechnik und in der Verpackungsindustrie vollautomatische, auch als Umsetzungsmaschinen oder kurz Umsetzer bezeichnete Einrichtungen zum Umsetzen von Artikeln verwendet, welche in Verbindung mit der Bereitstellung von Umverpackungen den oder die jeweils in eine Umverpackung umzusetzende Artikel aus einem Zulauf aus beispielsweise in einem oder mehreren Artikelströmen aus ununterbrochenen unmittelbar aufeinander folgend oder bereits entsprechend ihrer Anzahl und/oder späteren Anordnung in der Umverpackung voneinander beabstandet gruppiert kontinuierlich oder diskontinuierlich vermittels eines ersten Fördermittels transportierten Artikeln entnehmen und in die vermittels eines zweiten Fördermittels zugeführten und auf diesem bereitstehenden Umverpackung umsetzen. Nachdem die Artikel in die Umverpackung eingesetzt worden sind, wird die so mit Artikeln versehene Umverpackung vermittels des zweiten Fördermittels abtransportiert.

Handelt es sich um verschließbare Umverpackungen, in welche die Artikel umgesetzt werden, kann gleichzeitig mit dem Einsetzen einer vollständigen Anzahl von in die Umverpackung einzusetzenden Artikeln oder im Anschluss hieran, beispielsweise während des Weitertransports vermittels des zweiten Fördermittels, ein Verschließen der Umverpackungen erfolgen.

Durch DE 42 04 993 C1 ist eine Vorrichtung zum Umgang mit an eine kontinuierlich arbeitende Verpackungsmaschine zugeführten Artikeln bekannt. Die Vorrichtung umfasst eine Umsetzungsmaschine mit mehreren Greifköpfen für jeweils eine Gruppe von in eine Umverpackung in Form eines Getränkekastens umzusetzenden Artikeln. Jeder Greifkopf ist an einem Hebelmechanismus bestehend aus jeweils vier um parallele, horizontale Hebelachsen gelenkig miteinander verbundenen Hebeln angeordnet, von denen zwei um ebenfalls horizontale Hebelachsen schwenkbar an einem zentralen, um eine parallel zu den Hebelachsen verlaufende Zentralachse drehbar angetriebenen Zentralträger angeordnet sind. Parallel zu dem Zentralträger ist eine Scheibe mit Steuerkurven angeordnet, in welche an einem Teil der Hebel jeden Hebelmechanismus angeordnete Zapfen eingreifen und dadurch einen Bewegungsablauf der Greifköpfe während eines Umlaufs des Zentralträgers um die Zentralachse steuern. Die Vorrichtung umfasst darüber hinaus ein erstes Fördermittel in Form eines horizontalen Förderbands, welches der Umsetzungsmaschine Artikel in einer Transportrichtung normal zur Zentralachse und den parallel zu dieser verlaufenden Hebelachsen zu führt, sowie ein unterhalb des ersten Fördermittels verlaufendes zweites Fördermittel, welches die Getränkekästen ebenfalls in Transportrichtung transportiert. Die vermittels des Förderbands transportierten Artikel sind in Reihen angeordnet, werden an einem Ende des Förderbandes durch einen Anschlag angehalten und von einem der Greifköpfe nach dem anderen entgegengenommen. Nach Entgegennahme einer Gruppe von Artikeln durch einen Greifkopf fährt der Greifkopf in Transportrichtung des Förderbands mit, hebt die entgegengenommenen Artikel über das Ende des Förderbands an, während der Anschlag am Ende des Förderbands abgesenkt wird, und senkt die Artikel anschließend auf ein tieferliegendes Niveau in einen vermittels des Getränkekästen kontinuierlich in horizontaler Richtung transportierenden zweiten Fördermittels transportierten Getränkekasten ab. Nach dem Absenken führt der Greiferkopf durch die Steuerkurven gesteuert zunächst eine Bewegung parallel zur Transportrichtung aus, während die von dem Greiferkopf entgegengenommen und in einen entsprechenden vermittels des zweiten Fördermittels transportierten Getränkekasten platzierten Artikel losgelassen werden. Am Ende des ersten Fördermittels rücken derweil weitere Artikel nach. Die Übergabe der von einem Greiferkopf entgegengenommenen Artikel wird abgeschlossen, indem der Greiferkopf noch während dessen Bewegung in Transportrichtung wieder angehoben wird und der befüllte Getränkekasten dem zweiten Fördermittel folgend abtransportiert wird. Die weiteren Artikel, welche in der Zwischenzeit nachgerückt sind, können über einen weiteren Greifkopf entgegengenommen und in einem weiteren nachfolgenden Getränkekasten abgesetzt werden.

Durch DE 43 29 179 A1 ist eine ähnliche Vorrichtung bekannt, mit dem Unterschied, dass die Greiferköpfe nicht an einem um eine horizontale Zentralachse rotierenden Zentralträger angeordnet sind, sondern an einem in einer vertikalen Ebene verlaufenden umlaufenden Zugmittel.

Durch DE 33 39 045 A1 ist eine ähnliche Vorrichtung bekannt, mit dem Unterschied, dass die Greiferköpfe in horizontaler Richtung an einer Kette geführt umlaufend sind und vermittels entlang horizontal umlaufender Schienen geführter Schlitten abgesenkt und wieder angehoben sowie geschlossen und geöffnet werden.

Nachteilig an dieser Art von Vorrichtungen zum Umgang mit Artikeln ist deren großer Platzbedarf in Transportrichtung sowie die eingeschränkte Taktung, da nur eine Gruppe von Artikeln nach der anderen in jeweils einen Getränkekasten umgesetzt wird.

Durch DE 102 10 353 A1 ist eine kurz als Umsetzeinrichtung bezeichenbare Einrichtung zum Umsetzen von Artikeln bekannt, welche einen an einem sechsachsigen Roboterarm angeordneten Greiferkopf aus mehreren Greiftulpen aufweist, welche während des Umsetzens der Artikel innerhalb einer durch die Greiftulpen gebildeten Ebene einzeln oder gruppenweise in ihrer Position relativ zueinander beweglich angetrieben sind.

Auch mittels einer solchen Vorrichtung kann nur eine Umverpackung nach der anderen befüllt werden, wodurch die Taktung stark eingeschränkt ist.

Durch DE 10 2011 002 575 A1 ist eine Vorrichtung zum Umgang mit Artikeln bekannt. Die Vorrichtung umfasst ein erstes Fördermittel zur Zufuhr von in Trays aufgenommenen Artikeln in einer ersten Transportrichtung, ein zweites Fördermittel zur Zufuhr von leeren Umverpackungen in einer zweiten Transportrichtung, und ein drittes Fördermittel zum Abtransport von Umverpackungen mit in diese eingesetzten Artikeln in einer dritten Transportrichtung. Die erste Transportrichtung und die zweite Transportrichtung sowie die dritte Transportrichtung verlaufen parallel zueinander. Die Vorrichtung umfasst darüber hinaus eine Beladestation mit einer Vorhaltefläche für leere Umverpackungen und einer sich in Richtung der dritten Transportrichtung an diese anschließende, zwischen dem ersten Fördermittel und dem zweiten Fördermittel angeordnete Einsetzfläche. Die Vorrichtung umfasst außerdem eine durch eine mit einem Schubelement ausgestattete Querschubeinheit gebildete Transfereinrichtung zum Transfer zugeführter Umverpackungen von dem zweiten Fördermittel auf die Vorhaltefläche in einer Richtung quer zu den Transportrichtungen der Fördermittel. Die Vorrichtung umfasst ferner eine Axialschubeinheit, welche die auf der Vorhaltefläche stehende, leere Umverpackung in Richtung der dritten Transportrichtung von der Vorhaltefläche zur Einsetzfläche weiterschiebt und dabei zugleich eine in der dritten Transportrichtung gesehen dahinter auf der Einsetzfläche stehende Umverpackungen mit in diese eingesetzten Artikeln in der dritten Transportrichtung von der Einsetzfläche auf das dritte Fördermittel überschiebt. Zudem umfasst die Vorrichtung eine Umsetzeinrichtung zur Entnahme und zum Umsetzen von Artikeln aus den Trays von dem ersten Fördermittel in auf die Einsetzfläche 4b transferierte Umverpackungen.

Durch WO 2013/010697 A1 ist bekannt, Artikel, leere Umverpackungen und Umverpackungen mit in diese eingesetzten Artikeln vermittels dreier paralleler Fördermittel zu- und abzuführen. Während des Umsetzens der Artikel befinden sich die leeren Umverpackungen auf einem eine Einsetzfläche bildenden vierten, zwischen den anderen Fördermittel angeordneten und parallel zu diesen verlaufenden Fördermittel.

Durch WO 2010/003146 A2 ist bekannt, mittels eines ersten Fördermittels eintreffende Artikel in leere Umverpackungen einzusetzen. Das erste Fördermittel verläuft parallel zu einem sowohl zur Zufuhr leerer Umverpackungen, als auch zum Abtransport von Umverpackungen mit in diese eingesetzten Artikeln vorgesehenen zweiten Fördermittel. Die Umverpackungen verbleiben während Umsetzen der Artikel auf dem zweiten Fördermittel.

Durch US 5,797,249 sind unterschiedliche Niveaus der Fördermittel für die Umverpackungen und für die Artikel vorbekannt.

Durch EP 1 410 995 A1 und durch WO 03/037723 A1 ist das Einsetzen von Gefachen in Umverpackungen bekannt.

Eine Aufgabe der Erfindung ist, eine Vorrichtung und ein Verfahren zum Umgang mit Artikeln anzugeben, welche beim Versehen einzelner Artikel oder mehrerer, beispielsweise zu einer Artikelgruppe gruppierter und/oder zu einem Gebinde zusammengefasster Artikel mit einer Umverpackung eine höhere Taktung erlauben.

Die obige Aufgabe wird jeweils gelöst mit den Merkmalen der unabhängigen Ansprüche. Weitere vorteilhafte Ausgestaltungen werden durch die Unteransprüche besch rieben.

Ein erster Gegenstand der Erfindung betrifft demnach eine Vorrichtung zum Umgang mit Artikeln, umfassend ein erstes Fördermittel zur Zufuhr von Artikeln, ein zweites Fördermittel zur Zufuhr von Umverpackungen sowie ein drittes Fördermittel zum Abtransport von Umverpackungen mit in diese eingesetzten Artikeln.

Die Vorrichtung umfasst außerdem eine durch einen Abschnitt, vorzugsweise einen Anfangsabschnitt, des dritten Fördermittels gebildete, zwischen dem ersten und dem zweiten Fördermittel angeordnete Einsetzfläche, sowie eine Transfereinrichtung zum Transfer zugeführter Umverpackungen von dem zweiten Fördermittel, vorzugsweise von einem beispielsweise durch einen Anschlag begrenzten Endabschnitt des zweiten Fördermittels, zur durch einen Abschnitt, vorzugsweise einen Anfangsabschnitt, des dritten Fördermittels gebildete Einsetzfläche.

Die Vorrichtung umfasst darüber hinaus eine Umsetzeinrichtung, welche Artikel von dem ersten Fördermittel in auf die Einsetzfläche transferierte Umverpackungen umsetzt.

Die Umsetzeinrichtung erfasst zunächst vermittels des ersten Fördermittels bereitgestellte Artikel, setzt die erfassten Artikel anschließend von dem ersten Fördermittel zur Einsetzfläche um und setzt die von ihr erfassten und von dem ersten Fördermittel zur Einsetzfläche umgesetzten Artikel mit deren Umsetzen in die auf die Einsetzfläche transferierte Umverpackungen ein.

Die Transfereinrichtung ist unabhängig von der Umsetzeinrichtung ausgebildet und betreibbar.

Durch die Einsetzfläche in Verbindung mit der von der Umsetzeinrichtung unabhängigen Transfereinrichtung wird eine Leistungssteigerung hinsichtlich der erzielbaren Taktung ausgehend von einer Vorrichtung ohne durch ein drittes Fördermittel gebildete Einsetzfläche erhalten.

Die höhere Taktung wird erzielt, da durch die Einsetzfläche in Verbindung mit der von der Umsetzeinrichtung unabhängigen Transfereinrichtung in einem ersten Takt vermittels des ersten Fördermittels zugeführte Artikel von der Umsetzeinrichtung erfasst werden können und die Umsetzeinrichtung mit dem Umsetzen der erfassten Artikel durch Start einer Bewegung der erfassten Artikel von dem ersten Fördermittel zur Einsetzfläche beginnen kann, während gleichzeitig noch leere Umverpackungen von einem Abschnitt, vorzugsweise einem beispielsweise durch einen Endanschlag in Transportrichtung des zweiten Fördermittels begrenzten Endabschnitt des zweiten Fördermittels zur durch einen Abschnitt, vorzugsweise einen Anfangsabschnitt, des dritten Fördermittels gebildeten, zwischen dem ersten und dem zweiten Fördermittel angeordneten Einsetzfläche transferiert, beispielsweise übergeschoben werden, und in einem zweiten Takt neue, leere Umverpackungen dem Endabschnitt des zweiten Fördermittels zugeführt werden können, während im zweiten Takt gleichzeitig das Umsetzen von im ersten Takt erfassten Artikeln abgeschlossen wird, indem Artikel in die auf der Einsetzfläche bereitstehende Umverpackungen eingesetzt werden.

Im zweiten Takt wird das Umsetzen der im ersten Takt erfassten Artikel beendet, indem von der Umsetzeinrichtung erfasste Artikel in die im ersten Takt auf die Einsetzfläche transferierte, beispielsweise übergeschobene, leere Umverpackungen eingesetzt werden, und mit einer Rückführung der Umsetzeinrichtung von der Einsetzfläche zum ersten Fördermittel zumindest begonnen wird, um erneut vom ersten Fördermittel zugeführte Artikel zu erfassen und umzusetzen.

In einem dritten Takt schließlich wird die Rückführung der Umsetzeinrichtung von der Einsetzfläche zum ersten Fördermittel abgeschlossen. Darüber hinaus erfolgt im dritten Takt, nachdem die Umsetzeinrichtung den Kollisionsbereich mit der mindestens einen auf der Einsetzfläche stehenden, nunmehr mit in diese eingesetzten Artikeln versehenen Umverpackung verlassen hat, der Abtransport der mindestens einen mit Artikeln versehenen Umverpackung von der Einsetzfläche, indem das dritte Fördermittel zumindest so lange betrieben wird, bis die mindestens eine zuvor auf der Einsetzfläche mit Artikeln versehene mindestens eine Umverpackung von der Einsetzfläche entfernt wird.

An den dritten Takt anschließend folgt zyklisch wiederkehrend wieder ein erster Takt, gefolgt von einem zweiten Takt.

Vorzugsweise sind das erste Fördermittel und das zweite Fördermittel zumindest im Bereich ihrer an die Einsetzfläche angrenzenden Partien entlang der Einsetzfläche parallel zueinander und parallel zu dem die Einsetzfläche bildenden Abschnitt des dritten Fördermittels angeordnet. Bei der Anordnung parallel zueinander verlaufen die Transportrichtungen der Fördermittel zumindest im Bereich ihrer an die Einsetzfläche angrenzenden Partien parallel zueinander und parallel zu dem die Einsetzfläche bildenden Abschnitt des dritten Fördermittels.

Dies gilt sowohl für in die selbe Richtung verlaufende Transportrichtungen aller Fördermittel, als auch für in entgegengesetzte Richtungen verlaufende Transportrichtungen zumindest zweier Fördermittel.

Bevorzugt überlappen die parallel zueinander angeordneten Partien der Fördermittel einander und den die Einsetzfläche bildenden Abschnitt des dritten Fördermittels um die Länge wenigstens zweier Umverpackungen. Hierdurch können gleichzeitig zwei oder mehr Umverpackungen auf der Einsetzfläche bereit gestellt werden und gleichzeitig Artikel in die mehreren bereitgestellten Umverpackungen eingesetzt werden. Hierdurch kann die Taktung nochmals erhöht werden.

Die von der Transfereinrichtung praktizierte, kurz als Transferrichtung bezeichnete Richtung des Transfers von Umverpackungen vom zweiten Fördermittel zur Einsetzfläche verläuft in horizontaler Richtung vorzugsweise quer, bevorzugt orthogonal zur Transportrichtung des zweiten Fördermittels.

Damit verläuft die von der Transfereinrichtung praktizierte Transferrichtung in horizontaler Richtung vorzugsweise quer, bevorzugt orthogonal zu den Transportrichtungen sowohl des zweiten Fördermittels, als auch besonders bevorzugt des dritten Fördermittels.

Durch die in Bezug auf die Transportrichtungen des zweiten und des dritten Fördermittels quer und bevorzugt orthogonale horizontale Transferrichtung können jeweils gleichzeitig mehrere leere Umverpackungen von dem zweiten Fördermittel zur Einsetzfläche transferiert werden, wodurch zeitgleich Artikel in mehrere auf der Einsetzfläche abgestellte Umverpackungen eingesetzt werden können. Hierdurch wird die Taktung maßgeblich erhöht.

Die Transfereinrichtung kann mindestens einen Schieber umfassen.

Das zweite und die durch einen Abschnitt, vorzugsweise einen Anfangsabschnitt, des dritten Fördermittels gebildete Einsetzfläche liegen bevorzugt auf einem gemeinsamen, ersten Niveau, wohingegen das erste Fördermittel auf einem vorzugsweise höheren, zweiten Niveau liegt. Hierdurch kann ein zum Einsetzen von Artikeln in Umverpackungen notwendiger Vertikalhub der Umsetzeinrichtung auf das Wesentliche reduziert werden, wodurch die Taktung nochmals gesteigert werden kann.

Vorzugsweise liegt das zweite Niveau zumindest um die Höhe einer gegebenenfalls zunächst offenen und nach dem Einsetzen von Artikeln zu schließenden Umverpackung oberhalb des ersten Niveaus. Stehen von einer als verschließbare Kartonage ausgeführten Umverpackung zu verschließende Laschen nach oben ab, so liegt das zweite Niveau bevorzugt um die in unverschlossenem Zustand aufstehende Höhe der Laschen entsprechend höher oberhalb des ersten Niveaus, als wenn die Umverpackung beispielsweise durch einen separat bereitgestellten Deckel verschlossen wird.

Das Verschließen der Umverpackungen mit in diese eingesetzten Artikeln kann noch auf der Einsetzfläche, beispielsweise mit oder im Anschluss an das Einsetzen der Artikel erfolgen, oder in einem separaten Behandlungsschritt beispielsweise im Anschluss oder im weiteren Verlauf des dritten Fördermittels der Vorrichtung zum Umgang mit Artikeln erfolgen. Beispielsweise können die Umverpackungen mit in diese eingesetzten Artikeln im weiteren Verlauf des dritten Fördermittels mit Deckeln verschlossen werden.

Vor dem Einsetzen der Artikel in auf die Einsetzfläche transferierte Umverpackungen können auch als so genannte Baskets bezeichnete Gefache in die Umverpackungen eingesetzt werden, welche den Artikeln innerhalb der Umverpackungen feste Plätze zuweisen und diese dadurch beim Weitertransport der Umverpackungen mit in diese eingesetzten Artikeln bis zur Entnahme der Artikel und deren Verbrauch vor einem Gegeneinanderstoßen und Aneinanderreiben schützen, was ansonsten beispielsweise durch Abwetzungsspuren, etwa von auf den Artikeln beispielsweise in Form von Etiketten aufgebrachten Informationen, und/oder Beschädigungen der Artikel untereinander einen negativen Qualitätseindruck zur Folge haben kann.

Die Gefache können bereits vor dem Transfer der Umverpackungen zur Einsetzfläche in die Umverpackungen eingesetzt sein oder werden, oder die Gefache können noch vor den Artikeln oder gemeinsam mit diesen oder nach dem Einsetzen der Artikel in die Umverpackungen eingebracht werden. Das nachträgliche Einbringen von Gefachen, insbesondere mit leichten, innerhalb der Umverpackungen mit geringem Kraftaufwand verschiebbaren Artikeln, weist den Vorteil einer einfacheren Platzierung der Artikel in den Umverpackungen einhergehend mit einem verringerten Steuerungsaufwand auf, da beispielsweise Artikel mit auf deren Aufstandsflächen gegenüberliegend konischem oder ähnlichem Verlauf, wie etwa Getränkeflaschen mit einem sich von oben nach unten zumindest abschnittsweise weitenden Flaschenhals, mit dem Einsetzen der Gefache durch diese innerhalb der Umverpackungen horizontal verschoben werden können.

Die Gefache können beispielsweise noch auf dem zweiten Fördermittel, bevorzugt im Bereich eines besonders bevorzugt eine parallel zur Einsetzfläche verlaufende Partie des zweiten Fördermittels bildenden Endabschnitts des zweiten Fördermittels in die Umverpackungen eingebracht werden, oder bereits beispielsweise mit oder im Anschluss an ein Aufrichten der Umverpackungen in diese eingebracht werden oder bereits in einer entsprechenden Kartonage mit eingearbeitet sein, wobei sich die Gefache mit dem Aufrichten der Kartonage innerhalb der Umverpackung entfalten können.

In Verbindung mit dem Einbringen von Gefachen vor dem Einsetzen von Artikeln in die Umverpackungen kann eine separate Einbringungsfläche zwischen zweitem Fördermittel und der Einsetzfläche vorgesehen sein. Dementsprechend kann eine zusätzliche Einrichtung zum Transfer vorgesehen sein, die ebenfalls Teil einer Transfereinrichtung oder von dieser umfasst sein kann.

Im weiteren Verlauf des dritten Fördermittels der Vorrichtung zum Umgang mit Artikeln kann ein Stapelplatz vorgesehen sein, an dem beispielsweise verschlossene Umverpackungen mit in diese eingesetzten Artikeln zu Stapellagen gruppiert zu einem Stapel aufgestapelt werden, der dann nach Erreichen einer vorgegebenen Stapelhöhe, entsprechend einer vorgegebenen Anzahl von am Stapelplatz übereinander gestapelten Stapellagen abtransportiert wird, um Platz zum Aufstapeln eines neuen Stapels zu schaffen.

Die vermittels des ersten Fördermittels zugeführten Artikel sind bevorzugt bereits beispielsweise zu in jeweils eine Umverpackung einzusetzenden Artikelgruppen geordnet. Die vermittels des ersten Fördermittels zugeführten Artikel können aneinander anstehen oder lückenhaft hintereinander gereiht zugeführt werden. Die vermittels des ersten Fördermittels zugeführten Artikel können in einer oder in mehreren parallel verlaufenden Reihen zugeführt werden. Hierzu können die Artikel über einen geeigneten Zulauf an das erste Fördermittel übergeben werden und nach der Übergabe an das erste Fördermittel in einer oder in mehreren parallel zueinander orientierten Gassen geführt sein.

Die vermittels des ersten Fördermittels zugeführten Artikel bilden demnach einen ein- oder mehrreihigen Artikelstrom aus geschlossen und/oder lückenhaft hintereinander gereihten Artikeln.

Die Artikel können entlang eines Zulaufs zum ersten Fördermittel zuvor behandelt worden sein, beispielsweise durch Herstellung eines Behälters und/oder Reinigung einer Außen und/oder Innenfläche und/oder Kühlung und/oder Befüllung und/oder Verschließen, um ohne Anspruch auf Vollständigkeit der Aufzählung nur einige Beispiele zur Behandlung von Artikeln zu nennen, und/oder mit den Artikeln kann entlang eines Zulaufs zum ersten Fördermittel zuvor umgegangen worden sein, beispielsweise durch Abtrennung einer Anzahl von Artikeln von einem oder mehreren Artikelströmen aus unmittelbar hintereinander folgend transportierten Artikeln und/oder Gruppierung einer Anzahl von Artikeln zu Artikelgruppen und/oder Zusammenstellung und Zusammenfassung einer Anzahl von Artikeln zu Gebinden, um ohne Anspruch auf Vollständigkeit der Aufzählung nur einige Beispiele zum Umgang mit Artikeln zu nennen, bevor sie anschließend vermittels der Vorrichtung zum Umgang mit Artikeln in die Umverpackungen eingesetzt werden.

Die Fördermittel umfassen bevorzugt mindestens eine Horizontalfördereinrichtung, wie beispielsweise einen Bandförderer und/oder einen Rollenförderer.

Bei den Umverpackungen handelt es sich bevorzugt um Kartonagen beispielsweise in Form von Kartonschachteln mit oder ohne darin angeordnete oder anordbare, einzelne Artikel voneinander trennende und/oder fern haltende Gefache.

Es ist ersichtlich, dass die Erfindung verwirklicht sein kann durch eine Vorrichtung zum Umgang mit Artikeln mit:
- einem ersten, Artikel in einer ersten Transportrichtung zuführenden Fördermittel,
- einem zweiten, Umverpackungen in einer bevorzugt parallel zur ersten Transportrichtung gleichgerichtet oder entgegengesetzt verlaufenden zweiten Transportrichtung zuführenden Fördermittel,
- einem dritten, Umverpackungen mit in diese eingesetzen Artikeln in einer bevorzugt parallel zur ersten und zur zweiten Transportrichtung gleichgerichtet oder entgegengesetzt verlaufenden dritten Transportrichtung abtransportierenden Fördermittel,
- einer zwischen dem ersten und dem zweiten Fördermittel angeordneten, durch einen Abschnitt, vorzugsweise einen Anfangsabschnitt, des dritten Fördermittels gebildete Einsetzfläche,
- einer Transfereinrichtung zum Transfer zugeführter Umverpackungen von dem zweiten Fördermittel zur Einsetzfläche, und
- einer Umsetzeinrichtung zum Umsetzen von Artikeln von dem ersten Fördermittel in auf die Einsetzfläche transferierte Umverpackungen.

Ein zweiter Gegenstand der Erfindung betrifft ein Verfahren zum Umgang mit Artikeln, welches vorsieht, in einem oder in mehreren Artikelströmen aus geschlossen und/oder lückenhaft hintereinander gereiht und/oder gruppiert zugeführte Artikel in auf einer Einsetzfläche bereitstehende Umverpackungen einzusetzen, welche wiederum selbst unabhängig von den Artikeln in einer Transportrichtung zugeführt und einzeln oder gruppenweise quer zu der Transportrichtung auf die Einsetzfläche transferiert werden und von dort aus nach dem Einsetzen von Artikeln parallel zu der Transportrichtung - nunmehr mit in sie eingesetzten Artikeln versehen - unabhängig von der Zufuhr von Artikeln und unabhängig von der Zufuhr von Umverpackungen in Richtung der Transportrichtung oder entgegengesetzt zu dieser abtransportiert werden.

Sowohl die Vorrichtung, als auch das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Darüber hinaus kann die Vorrichtung alternativ oder zusätzlich einzelne oder eine Kombination mehrerer zuvor in Verbindung mit dem Verfahren beschriebene Merkmale aufweisen, ebenso wie das Verfahren alternativ oder zusätzlich einzelne oder eine Kombination mehrerer zuvor in Verbindung mit der Vorrichtung beschriebene Merkmale aufweisen kann.

Wichtig ist hervorzuheben, dass die der beschriebenen Vorrichtung zum Umgang mit Artikeln und/oder dem beschriebenen Verfahren zum Umgang mit Artikeln zur Verfügung gestellten Umverpackungen vermittels einer nachfolgend beschriebenen Anlage zum Aufziehen und Aufrichten von zusammengelegten oder zusammengefalteten Kartonagen zu stehend angeordneten Gefachen und/oder Umverpackungen bereitgestellt werden können, welche ein im Anschluss an die Anlage beschriebenes Verfahren zum Aufziehen und Aufrichten von zusammengelegten oder zusammengefalteten Kartonagen zu stehend angeordneten Gefachen und/oder Umverpackungen ausführt.

Bei stehend angeordneten Gefachen und/oder Umverpackungen liegen die Zugangsöffnungen, durch welche Artikel in die Gefache und/oder Umverpackungen eingebracht werden können, in einer horizontalen Ebene.

Die Anlage weist einen wenigstens einen Stapel liegend übereinander angeordneter, flach zusammengelegter Kartonagen umfassenden Kartonagenvorrat auf.

Die Kartonagen bestehen aus mehreren, untereinander beispielsweise durch Knickkanten und/oder Klebeverbindungen und/oder Steckverbindungen verbundenen Kartonagewänden, die beispielsweise aus bogenförmigem Material ausgeschnitten und/oder ausgestanzt sein können. In zusammengelegtem Zustand bilden jeweils mindestens zwei miteinander verbundene Kartonagewände eine obere und eine untere Flachseite einer flach zusammengelegten Kartonage.

Die Anlage weist ferner eine neben dem Kartonagenvorrat angeordnete Aufrichteinrichtung auf.

Die Anlage weist außerdem eine Greifeinrichtung zur gleichzeitigen Erfassung von jeweils einer obersten Kartonage nach der anderen von jedem Stapel übereinander angeordneter, flach zusammengelegter Kartonagen des Kartonagenvorrats auf.

Die Zahl von Stapeln liegend übereinander angeordneter, flach zusammengelegter Kartonagen des Kartonagevorrats entspricht bevorzugt der Anzahl von jeweils gleichzeitig von der Greifeinrichtung erfassbarer beziehungsweise erfasster Kartonagen.

Die Greifeinrichtung weist je gleichzeitig von ihr erfasster Kartonage mindestens ein Werkzeug auf, mit dem eine zuoberst auf einem Stapel des Kartonagevorrats liegende Kartonage an einer Kartonagewand ihrer oberen Flachseite erfasst und angehoben werden kann.

Um das mindestens eine Werkzeug der Greifeinrichtung zwischen dem Kartonagevorrat und der Aufrichteinrichtung horizontal, und zur Überbrückung von Höhenunterschieden und/oder zum Aufziehen von Kartonagen zu Gefachen und/oder Umverpackungen bevorzugt auch vertikal im Raum bewegen zu können, weist die Greifeinrichtung darüber hinaus mindestens einen Manipulator mit einem zumindest entlang einer Horizontalachse horizontal und bevorzugt auch entlang einer Vertikalachse vertikal beweglichen Manipulatorkopf auf, an dem das mindestens eine Werkzeug der Greifeinrichtung angeordnet ist.

Die Aufrichteinrichtung und der Kartonagevorrat sind in Richtung der Horizontalachse benachbart angeordnet.

Bevorzugt befinden sich zumindest in einer Ausgangsstellung die Aufrichteinrichtung sowie die durch die oberste Kartonage des mindestens einen Stapels Kartonagen gebildete Oberfläche des Kartonagevorrats auf dem selben Niveau.

Besonders bevorzugt befindet sich die durch die oberste Kartonage des mindestens einen Stapels Kartonagen gebildete Oberfläche des Kartonagevorrats auf einem von dem mindestens einen Werkzeug der Aufrichteinrichtung in der Horizontalstellung deren mindestens einen Trägers gebildeten Niveau der Aufrichteinrichtung mindestens um die Höhe eines liegend aufgezogenen Gefaches und/oder Umverpackung höheren Niveau. Hierdurch wird zur Erhöhung der erzielbaren Taktung ein Vertikalhub des Manipulatorkopfs bei einer nach dem Aufziehen einer Kartonage zu einem liegenden Gefache und/oder Umverpackung zum Erfassen der nächsten Kartonagen erforderlichen Rückführungsbewegung von der Aufrichteinrichtung zum Kartonagevorrat eingespart.

Das mindestens eine an dem wenigstens einen Manipulatorkpf angeordnete Werkzeug der Greifeinrichtung ist damit horizontal zwischen dem Kartonagevorrat und der in Richtung der Horizontalachse gesehen neben diesem angeordneten Aufrichteinrichtung hin- und her beweglich, sowie bevorzugt anheb- und absenkbar. Bei dem mindestens einen Manipulator kann es sich beispielsweise um einen mehrachsigen, beispielsweise sechsachsigen Roboterarm oder ein entlang einer horizontalen Achse lateral hin- und her fahrbares, sowie vorzugsweise auch entlang einer vertikalen Achse anheb- und absenkbares Portal oder einen Tri- oder Quadropoden handeln, um nur einige denkbare Manipulatoren aufzuzählen.

Die Aufrichteinrichtung weist mindestens einen um eine horizontale, beispielsweise orthogonal zur Horizontalachse und orthogonal zur Vertikalachse verlaufende Schwenkachse aus einer Horizontalstellung in eine Vertikalstellung und umgekehrt beispielsweise durch abklappen und wieder hochklappen hin- und her schwenkbaren Träger auf.

Die Aufrichteinrichtung weist je gleichzeitig von der Greifeinrichtung erfassbarer beziehungsweise erfasster Kartonage mindestens ein an deren wenigstens einem Träger angeordnetes Werkzeug auf, mit dem in dessen beziehungsweise in deren Horizontalstellung mindestens eine vermittels der Greifeinrichtung auf die Aufrichteinrichtung verbrachte Kartonage an einer Kartonagewand ihrer unteren Flachseite erfasst und festgehalten werden kann, und mit dem nach dem Aufziehen der Kartonagen durch Vergrößerung des Abstands zwischen den Werkzeugen der Greifeinrichtung und der Aufrichteinrichtung entlang der Vertikalachse, beispielsweise durch ein vertikales Anheben des an dem bevorzugt ohnehin vertikal beweglichen Manipulatorkopf angeordneten Werkzeugs der Greifeinrichtung, anschließendem dem Lösen nur des mindestens einen Werkzeugs der Greifeinrichtung die weiterhin von dem mindestens einen Werkzeug der Aufrichteinrichtung festgehaltenen, liegend aufgezogenen Gefache und/oder Umverpackungen durch abklappen des Trägers stehend aufgerichtet werden.

Die Aufrichteinrichtung kann an ihrem mindestens einen Träger eine beispielsweise als eine Faltklappe ausgeführte Einrichtung aufweisen, welche aufgezogene und zumindest bis nach dem Verschwenken des mindestens einen Trägers der Aufrichteinrichtung um dessen horizontale, beispielsweise orthogonal zur Horizontalachse und orthogonal zur Vertikalachse verlaufende Schwenkachse aus einer Horizontalstellung in eine Vertikalstellung aufgerichtete Gefache und/oder Umverpackungen in Form hält und gegebenenfalls vor einem Abrutschen von dem Träger hindert, wenn das mindestens eine Werkzeug der Aufrichteinrichtung ein zumindest von ihm bis zum Ende des Aufziehens festgehaltenes Gefache und/oder Umverpackung freigibt.

Ist die Aufrichteinrichtung vertikal beweglich ausgeführt, kann auf einen vertikal beweglichen Manipulatorkopf verzichtet werden, indem dieser nur Kartonagen vom Kartonagevorrat zur Aufrichteinrichtung horizontal verbringt und die Aufrichteinrichtung durch Absenken nach unten den Abstand zwischen ihren und den Werkzeugen der Greifeinrichtung zum Aufziehen der Kartonagen zu liegenden Gefachen und/oder Umverpackungen vergrößert.

Zusammengefasst bildet die Aufrichteinrichtung zusammen mit der Greifeinrichtung zugleich auch eine Aufzieheinrichtung, welche durch Vergrößerung des Abstandes zwischen einer von mindestens einem Werkzeug der Greifeinrichtung gehaltenen Kartonagewand der oberen Flachseite einer flach zusammengelegten Kartonage und einer von mindestens einem Werkzeug der Aufrichteinrichtung gehaltenen Kartonagewand der unteren Flachseite der flach zusammengelegten Kartonage diese zu einem liegenden Gefache und/oder Umverpackung aufzieht.

Bei liegenden Gefachen und/oder Umverpackungen befinden sich die Zugangsöffnungen durch welche Artikel in die Gefache und/oder Umverpackungen eingebracht werden können, im Gegensatz zu stehend angeordneten Gefachen und/oder Umverpackungen nicht in einer horizontalen, sondern in einer vertikalen Ebene.

Die Anlage kann darüber hinaus eine Steuereinrichtung umfassen, welche wenigstens:
- den mindestens einen Manipulator der Greifeinrichtung so steuert, dass dieser einen zyklischen Bewegungsablauf ausführt, in dessen Verlauf der Manipulator das mindestens eine Werkzeug auf eine Kartonagewand der oberen Flachseite einer zuoberst auf wenigstens einem Stapel des Kartonagevorrats liegenden Kartonage absenkt, wieder anhebt, zur Aufrichteinrichtung verfährt, auf die Aufrichteinrichtung absenkt, wieder anhebt und schließlich wieder über den Kartonagevorrat verfährt,
- das mindestens eine Werkzeug der Greifeinrichtung so steuert, dass dieses nach dem Absenken auf eine Kartonagewand der oberen Flachseite einer zuoberst auf wenigstens einem Stapel des Kartonagevorrats liegenden Kartonage erfasst und festhält, bis das Werkzeug der Greifeinrichtung im Verlauf des zyklischen Bewegungsablaufs wieder von der Aufrichteinrichtung zumindest so weit angehoben worden ist, dass die Kartonage zu einem Gefache und/oder Umverpackung aufgezogen ist,
- den mindestens einen Träger der Aufrichteinrichtung so steuert, dass dieser einen zyklischen Bewegungsablauf ausführt, in dessen Verlauf er um 90° aus der Horizontalen in die Vertikale und wieder zurück um dessen Schwenkachse geschwenkt wird, wobei der Träger spätestens eine Horizontalstellung einnimmt, wenn der mindestens eine Manipulator während seines Bewegungsablaufs das wenigstens eine Werkzeug der Greifeinrichtung auf die Aufrichteinrichtung absenkt oder abgesenkt hat, und die Horizontalstellung so lange beibehält, bis das Werkzeug der Greifeinrichtung im Verlauf des zyklischen Bewegungsablaufs des Manipulators wieder von der Aufrichteinrichtung zumindest so weit angehoben worden ist, dass die Kartonage zu einem Gefache und/oder Umverpackung aufgezogen ist, um hiernach durch Abklappen und/oder Verschwenken um dessen Schwenkachse eine Vertikalstellung einzunehmen, und
- das mindestens eine Werkzeug der Aufrichteinrichtung so steuert, dass dieses nach dem Absenken des mindestens einen Manipulators eine Kartonagewand der unteren Flachseite der wenigstens einen von dem zumindest einen Werkzeug der Greifeinrichtung gehaltenen Kartonage erfasst und zumindest so lange festhält, bis die zu einem Gefache und/oder Umverpackung aufgezogene Kartonage durch Abklappen und/oder Verschwenken des mindestens einen Trägers der Aufrichteinrichtung um 90° um dessen Schwenkachse aus der Horizontalstellung in die Vertikalstellung aufgerichtet worden und zur Übergabe zu deren weiteren Verwendung bereit ist.

Ist die Aufrichteinrichtung mit einer als Faltklappe ausgeführten Einrichtung an ihrem mindestens einen Träger ausgestattet, welche aufgezogene und bis zumindest nach dem Verschwenken des mindestens einen Trägers der Aufrichteinrichtung um dessen horizontale, beispielsweise orthogonal zur Horizontalachse und orthogonal zur Vertikalachse verlaufende Schwenkachse aus einer Horizontalstellung in eine Vertikalstellung aufgerichtete Gefache und/oder Umverpackungen in Form hält und gegebenenfalls vor einem Abrutschen von dem Träger hindert, wenn das mindestens eine Werkzeug der Aufrichteinrichtung ein zumindest von ihm bis zum Ende des Aufziehens festgehaltenes Gefache und/oder Umverpackung freigibt, so kann die Steuereinrichtung zusätzlich diese Faltklappe derart steuern, dass diese spätestens am Ende des Aufziehvorgangs mit Beginn des Verschwenkens des Trägers aus dessen Horizontal- in die Vertikalstellung aufgeklappt wird, so dass am Ende des Aufrichtvorgangs die Faltklappe aufgezogene und aufgerichtete Gefache und/oder Umverpackungen in Form hält und gegebenenfalls beispielsweise von unten her vorzugsweise auch nach dem Loslassen des Werkzeugs der Aufrichteinrichtung so lange stützt, bis die aufgezogenen und aufgerichteten Gefache und/oder Umverpackungen deren Weiterverwendung zugeführt werden. Im Anschluss hieran kann die Steuereinrichtung die Faltklappe dazu veranlassen, wieder in ihre Ausgangsstellung in angeklapptem Zustand zurückzukehren. Das Ab- und Anklappen zumindest eines ein Abrutschen verhindernden Teils der Faltklappe kann gegebenenfalls alternativ oder zusätzlich schwerkraftunterstützt und/oder schwerkraftgesteuert erfolgen.

Abhängig von der Konfiguration der Kartonagen und der aus diesen aufziehbaren Gefache und/oder Umverpackungen kann die Steuereinrichtung den Manipulator dazu veranlassen, dass dieser während des Anhebens des Werkzeugs der Greifeinrichtung zugleich eine parallel und/oder orthogonal zur Horizontalachse verlaufende Horizontalbewegung ausführt, an deren Ende die von einem Werkzeug der Greifeinrichtung erfasste Kartonagenwand der oberen Flachseite einer Kartonage und die von einem Werkzeug der Aufrichteinrichtung erfasste Kartonagenwand der unteren Flachseite einer Kartonage in einer Draufsicht gesehen in horizontaler Richtung deckungsgleich übereinander angeordnet sind, entsprechend zwei gegenüberliegenden Wandungen eines aufgezogenen Gefaches und/oder Umverpackung.

Vorzugsweise sind die Kartonagen jedoch so konfiguriert, dass diese durch bloße Abstandsvergrößerung zwischen den Werkzeugen der Greifeinrichtung und der Aufrichteinrichtung aufgezogen werden können. Dies ist beispielsweise durch einen zieharmonikaartigen Aufbau mit einer geraden Anzahl der die von den Werkzeugen erfassten Kartonagewände an jeweils einer ihrer Schmalseiten miteinander verbindenden Kartonagewände möglich.

Das nach dem Absenken auf die Aufrichteinrichtung erfolgende Anheben kann damit abhängig von der Ausgestaltung der Kartonage ausschließlich in vertikaler Richtung erfolgen.

Um eine möglichst hohe Taktung zu erzielen, kann die Steuereinrichtung vor und nach dem Aufziehen von Kartonagen zu Gefachen und/oder Umverpackungen kombinierte Bewegungen des Manipulators in horizontaler und vertikaler Richtung veran lassen.

Als mindestens ein Werkzeug weist die Greifeinrichtung vorzugsweise je gleichzeitig erfasster Kartonage mindestens eine nach unten gerichtete Saugglocke auf, welche durch Beaufschlagung mit Unterdruck die jeweils zuoberst auf einem Stapel des Kartonagevorrats liegende Kartonage an einer der Kartonagewände ihrer oberen Flachseite durch Unterdruck festzuhalten in der Lage ist.

Eine Saugglocke weist eine nach unten hin offene Manschette aus einem elastischen, luftdichten Material auf, sowie einen nach oben von der Manschette wegführenden Anschluss für eine Unterdruckquelle, wie beispielsweise eine Vakuum- oder Unterdruckpumpe, oder einen mit einer Vakuum- oder Unterdruckpumpe verbundenen Unterdruckspeicher. Vorzugsweise ist zwischen jeder einer Kartonage zugeordneten Saugglocke und der Unterdruckquelle ein steuerbar zu öffnendes und zu schließendes Ventil angeordnet. Wird das Ventil geöffnet, kommuniziert die Unterdruckquelle mit der Saugglocke. Ist die nach unten hin offene Manschette nicht abgedeckt strömt Luft durch die Saugglocke zur Unterdruckquelle, die damit streng genommen eine Senke für die unter Umgebungsdruck stehende Luft darstellt. Ist die nach unten hin offene Manschette durch eine Kartonagenwand versperrt, bildet sich in der Saugglocke Unterdruck aus und die Kartonagewand nebst zugehöriger Kartonage wird festgehalten.

Vorzugsweise weist die Greifeinrichtung je gleichzeitig erfasster Kartonage mindestens vier nach unten gerichtete Saugglocken als Werkzeug auf, welche die jeweils zuoberst auf einem Stapel liegende Kartonage im Bereich der Ecken einer der Kartonagewände ihrer oberen Flachseite durch Unterdruck festhalten können. Dies weist im Vergleich zu nur einer Saugglocke je gleichzeitig erfasster Kartonage den Vorteil höherer Redundanz und zugleich einer höheren Haltekraft auf, die wie bereits erläutert zum Aufziehen der zusammengefalteten Kartonagen benötigt wird.

An dem Manipulator ist die mindestens eine Saugglocke je Stapel des Kartonagevorrats der Greifeinrichtung angeordnet, wodurch diese auf den Kartonagevorrat abgesenkt, mit angesaugter Kartonage wieder angehoben, seitlich zur Aufrichteinrichtung verfahren und auf diese abgesenkt und wieder angehoben, sowie nach Freigabe der dann zu einem Gefache und/oder Umverpackung aufgezogenen Kartonage wieder zurück zum Kartonagevorrat verfahren werden kann.

Vorzugsweise handelt es sich bei diesem mindestens einen Werkzeug der Aufrichteinrichtung beispielsweise ebenfalls um eine oder mehrere Saugglocken.

Der Kartonagenvorrat kann ein einen oder mehrere Stapel beherbergendes, aufrecht stehendes Magazin umfassen, welches von seiner Oberseite aus zur Entnahme von Kartonagen zugänglich ist. das Magazin mehrere Stapel, so sind diese bevorzugt zumindest teilweise voneinander durch Magazintrennwände voneinander getrennt und/oder derart voneinander beabstandet in dem Magazin beherbergt, dass ein Kontakt der einzelnen Kartonagen von in dem Magazin benachbarter Stapel ausgeschlossen ist. Hierdurch wird ein gegenseitiges Verhaken gleichzeitig von mehreren Stapeln des Kartonagevorrats zuoberst abgenommener Kartonagen verhindert und dadurch die Betriebssicherheit der Anlage erhöht.

Vorzugsweise weist der Kartonagevorrat in horizontaler Richtung parallel zur Schwenkachse des mindestens einen Trägers der Aufrichteinrichtung gesehen zwei oder mehr nebeneinander benachbarte Stapel liegend übereinander gestapelter, flach zusammengelegter Kartonagen auf.

Zwei oder mehrere in horizontaler Richtung parallel zur Schwenkachse des mindestens einen Trägers der Aufrichteinrichtung gesehen nebeneinander benachbarte Stapel liegend übereinander gestapelter, flach zusammengelegter Kartonagen des Kartonagevorrats können in horizontaler Richtung orthogonal zur Schwenkachse des mindestens einen Trägers der Aufrichteinrichtung versetzt zueinander angeordnet sein oder parallel zur Schwenkachse des mindestens einen Trägers der Aufrichteinrichtung gesehen miteinander fluchten.

Alternativ oder zusätzlich können in horizontaler Richtung parallel zur Schwenkachse des mindestens einen Trägers der Aufrichteinrichtung gesehen nebeneinander benachbarte Stapel liegend übereinander gestapelter, flach zusammengelegter Kartonagen des Kartonagevorrats relativ zueinander um 90° oder 180° oder 270° verdreht oder spiegelbildlich entsprechend einer Spiegelung an einer zwischen zwei benachbarten Stapeln orthogonal zur Schwenkachse des mindestens einen Trägers der Aufrichteinrichtung verlaufenden Spiegelachse, oder an einem zwischen den benachbarten Stapeln liegenden Spiegelpunkt angeordnet sein.

Bevorzugt weist die Aufrichteinrichtung mindestens zwei um jeweils eine eigene Schwenkachse aus einer Horizontalstellung in eine Vertikalstellung und umgekehrt verschwenkbare Träger auf. Die Schwenkachsen der Träger verlaufen hierbei parallel. In einer horizontalen Richtung orthogonal zu den Schwenkachsen gesehen weist der Kartonagevorrat eine der Anzahl der jeweils um eigene Schwenkachsen schwenkbaren Träger entsprechende Zahl von benachbarten Stapeln liegend übereinander angeordneter, flach zusammengelegter Kartonagen auf.

Besonders bevorzugt weist die Aufrichteinrichtung zwei um jeweils eine eigene Schwenkachse in entgegengesetzten Schwenkrichtungen aus einer Horizontalstellung in eine Vertikalstellung und umgekehrt verschwenkbare Träger auf. Die Schwenkachsen der Träger verlaufen auch hierbei parallel. In einer horizontalen Richtung orthogonal zu den Schwenkachsen gesehen weist der Kartonagevorrat zwei benachbarte Stapel übereinander angeordneter, flach zusammengelegter Kartonagen auf. Die liegend gestapelten Kartonagen eines ersten Stapels der beiden in horizontaler Richtung orthogonal zu den Schwenkachsen gesehen benachbarten Stapel sind hierbei in Bezug auf eine zwischen den beiden Stapeln parallel zu den Schwenkachsen verlaufenden Spiegelachse gesehen vorzugsweise spiegelbildlich zu den ebenfalls liegend gestapelten Kartonagen eines zweiten Stapels der beiden in horizontaler Richtung orthogonal zu den Schwenkachsen gesehen benachbarten Stapel gestapelt.

Sowohl bei gleichen, als auch bei entgegengesetzten Schwenkrichtungen zweier oder mehrerer Träger der Aufrichteinrichtung um deren jeweilige Schwenkachsen können in einer horizontalen Richtung orthogonal zu den Schwenkachsen gesehen benachbarte Stapel liegend übereinander angeordneter, flach zusammengelegter Kartonagen des Kartonagevorrats in Bezug auf eine horizontale, orthogonal zu den Schwenkachsen verlaufende Achse fluchtend oder versetzt zueinander angeordnet sein. Hierdurch kann die Anordnung der Stapel im Kartonagevorrat an die Faltung der Kartonagen angepasst werden, so dass nach dem Aufziehen und Aufrichten von Kartonagen von entsprechend im Kartonagevorrat benachbarten Stapeln zu Gefachen und/oder Umverpackungen in Bezug auf eine horizontale, orthogonal zu den Schwenkachsen verlaufende Achse beispielsweise fluchten oder versetzt zueinander angeordnet sind.

Grundsätzlich denkbar sind auch hier, ähnlich wie bereits zuvor zu entlang der Schwenkachsen gesehen nebeneinander angeordneter Stapel des Kartonagevorrats beschrieben, um 90° oder 180° oder 270° verdreht oder spiegelbildlich entsprechend einer Spiegelung an einer zwischen zwei benachbarten Stapeln orthogonal zur Schwenkachse des mindestens einen Trägers der Aufrichteinrichtung verlaufenden Spiegelachse, oder an einem zwischen den benachbarten Stapeln liegenden Spiegelpunkt relativ zueinander angeordnete, nebeneinander benachbarte Stapel liegend übereinander gestapelter, flach zusammengelegter Kartonagen des Kartonagevorrats.

Endet das Aufrichten versetzt und ist eine fluchtende Anordnung für den weiteren Umgang erforderlich, so ist alternativ denkbar, die Träger der Aufrichteinrichtung parallel zu deren Schwenkachsen relativ zueinander beweglich anzuordnen, um aufgezogene und vermittels verschiedener Träger der Aufrichteinrichtung aufgerichtete Gefache und/oder Umverpackungen in eine miteinander fluchtende Anordnung zu überführen.

Die zwei Träger der Aufrichteinrichtung können jeder oder nur einige in horizontaler Richtung relativ zueinander und/oder gemeinsam miteinander beweglich angeordnet sein, um während deren bevorzugt gleichzeitigen Verschwenkens um deren Schwenkachsen auseinander gefahren werden zu können, um ein Aneinanderstoßen aufgezogener Gefache und/oder Umverpackungen während des Verschwenkens zu verhindern, und/oder um nach dem Erreichen der Vertikalstellung gegeneinander gefahren und/oder parallel zueinander verfahren werden zu können, wodurch eine Gruppierung der aufgezogenen und aufgerichteten Gefache und/oder Umverpackungen erhalten wird. Dadurch ist darüber hinaus eine Anpassung an Gefache und/oder Umverpackungen mit verschiedenen Außenabmessungen möglich.

Ferner ist durch eine horizontale Beweglichkeit des oder der Träger der Aufrichteinrichtung orthogonal zu dessen oder deren Schwenkachsen ein Abstreifen von aufgezogenen und aufgerichteten Gefachen und/oder Umverpackungen möglich, welche nach dem Lösen der Werkzeuge der Aufrichteinrichtung auf an den Trägern der Aufrichteinrichtung angeordneten, beispielsweise als eine Faltklappe je Träger ausgeführte Einrichtungen stehen bleiben, welche aufgezogene und nach dem Verschwenken der Träger der Aufrichteinrichtung um deren horizontale, beispielsweise orthogonal zur Horizontalachse und orthogonal zur Vertikalachse verlaufenden Schwenkachsen aus deren Horizontalstellungen in deren Vertikalstellungen aufgerichtete Gefache und/oder Umverpackungen vor einem Abrutschen von den Trägern hindern, wenn die Werkzeuge der Aufrichteinrichtung zumindest von ihnen bis zum Ende des Aufziehens festgehaltene Gefache und/oder Umverpackungen freigeben.

Die Anlage kann eine Weitergabeeinrichtung umfassen, welche aufgezogene und aufgerichtete Gefache und/oder Umverpackungen von der Aufrichteinrichtung, bevorzugt aus der Vertikalstellung des Trägers der Aufrichteinrichtung übernimmt und deren weiteren Verwendung, beispielsweise durch anschließendes Einsetzen von aufgezogenen und aufgerichteten Gefachen in andernorts bereitgestellte Umverpackungen und/oder dem Einbringen von Artikeln in Gefache und/oder Umverpackungen zuführt.

Die Weitergabeeinrichtung kann ein an einem Manipulator angeordnetes Werkzeug umfassen, welches aufgezogene und aufgerichtete Gefache und/oder Umverpackungen von der Aufrichteinrichtung übernimmt und unter vertikaler und/oder horizontaler Bewegung des Manipulators abtransportiert und beispielsweise einem zweiten Fördermittel einer zuvor beschriebenen Vorrichtung zum Umgang mit Artikeln übergibt.

Alternativ können die nach dem Verschwenken des mindestens einen Trägers der Aufrichteinrichtung stehend aufgerichteten Gefache und/oder Umverpackungen auch einfach durch Lösen des mindestens einen Werkzeugs der Aufrichteinrichtung losgelassen werden und dadurch beispielsweise einem direkt unterhalb der Aufrichteinrichtung hindurchführenden, beispielsweise durch ein zweites Fördermittel einer zuvor beschriebenen Vorrichtung zum Umgang mit Artikeln gebildeten Horizontalförderer übergeben werden. Der vertikale Abstand zwischen einem solchen Horizontalförderer und der Aufrichteinrichtung kann hierbei so eingestellt sein, dass die nach dem Verschwenken des mindestens einen Trägers aus dessen Horizontalstellung in dessen Vertikalstellung stehend aufgerichteten Gefache und/oder Umverpackungen einen kleinstmöglichen Abstand zur Oberfläche des Horizontalförderers einnehmen, diese beispielsweise streifen. Denkbar ist darüber hinaus eine dem Loslassen vorangehende Absetzbewegung der Aufrichteinrichtung in vertikaler Richtung.

Das mindestens eine Werkzeug der Weitergabeeinrichtung kann wenigstens eine Saugglocke umfassen.

Ein von einer zuvor beschriebenen Anlage ausführbares Verfahren zum Aufziehen und Aufrichten von zusammengelegten oder zusammengefalteten Kartonagen zu stehend angeordneten Gefachen und/oder Umverpackungen sieht vor, die oberste Kartonage von einem Stapel übereinander angeordneter, flach zusammengelegter Kartonagen eines Vorrats von Kartonagen an einer Kartonagewand ihrer oberen Flachseite von oben kommend festzuhalten und von dem Stapel abzunehmen.

Das Verfahren zum Aufziehen und Aufrichten von zusammengelegten oder zusammengefalteten Kartonagen zu stehend angeordneten Gefachen und/oder Umverpackungen sieht anschließend vor, die an einer Kartonagewand ihrer oberen Flachseite gehaltene Kartonage auch an einer Kartonagewand ihrer unteren Flachseite von unten her festzuhalten und durch entgegengesetztes Ziehen den vertikalen Abstand zwischen der Kartonagewand, an der die Kartonage an ihrer oberen Flachseite gehalten wird, und der Kartonagewand, an der die Kartonage an ihrer unteren Flachseite gehalten wird so weit zu vergrößern, bis die Kartonage zu einem liegenden Gefache und/oder Umverpackung aufgezogen ist.

Daraufhin sieht das Verfahren zum Aufziehen und Aufrichten von zusammengelegten oder zusammengefalteten Kartonagen zu stehend angeordneten Gefachen und/oder Umverpackungen vor, das aufgezogene Gefache und/oder Umverpackung an seiner vormals der oberen Flachseite der Kartonage zugeordneten Kartonagewand freizugeben.

Schließlich sieht das Verfahren zum Aufziehen und Aufrichten von zusammengelegten oder zusammengefalteten Kartonagen zu stehend angeordneten Gefachen und/oder Umverpackungen vor, das weiterhin an seiner vormals der unteren Flachseite der Kartonage zugeordneten Kartonagewand festgehaltene, liegende, aufgezogene Gefache und/oder Umverpackung um eine horizontale Schwenkachse zu verkippen und im Anschluss hieran das aufgezogene und nunmehr aufgerichtete Gefache und/oder Umverpackung auch an seiner vormals der unteren Flachseite der Kartonage zugeordneten Kartonagewand freizugeben.

Vorzugsweise sieht das Verfahren zum Aufziehen und Aufrichten von zusammengelegten oder zusammengefalteten Kartonagen zu stehend angeordneten Gefachen und/oder Umverpackungen vor, gleichzeitig mehrere Kartonagen wie beschrieben zu Gefachen und/oder Umverpackungen aufzuziehen und aufzurichten.

Dabei können jeweils zwei Kartonagen ein Paar gleichzeitig zu Gefachen und/oder Umverpackungen aufzuziehender und aufzurichtender Kartonagen bilden, welche nach deren Aufziehen zu liegenden Gefachen und/oder Umverpackungen in gleicher oder entgegengesetzter Schwenkrichtung um jeweils eigene, parallel verlaufende, horizontale Schwenkachsen zu stehend angeordneten Gefachen und/oder Umverpackungen aufgerichtet werden.

Die Kartonagen eines Paars gleichzeitig zu Gefachen und/oder Umverpackungen aufzuziehender und aufzurichtender Kartonagen können vor dem Aufziehen fluchtend oder versetzt zueinander angeordnet sein. Alternativ oder zusätzlich können die Kartonagen eines Paars gleichzeitig zu Gefachen und/oder Umverpackungen aufzuziehender und aufzurichtender Kartonagen vor dem Aufziehen um beispielsweise 90°, 180°, 270° zueinander verdreht und/oder spiegelbildlich beispielsweise zu einer Spiegelachse oder einem Spiegelpunkt angeordnet sein.

Die aus einem Paar Kartonagen gleichzeitig aufgezogenen und aufgerichteten Gefache und/oder Umverpackungen können nach dem Aufziehen fluchtend oder versetzt zueinander angeordnet sein. Alternativ oder zusätzlich können die aus einem Paar Kartonagen gleichzeitig aufgezogenen und aufgerichteten Gefache und/oder Umverpackungen nach dem Aufziehen um beispielsweise 90°, 180°, 270° zueinander verdreht und/oder spiegelbildlich beispielsweise zu einer Spiegelachse oder einem Spiegelpunkt angeordnet sein.

Mehrere Kartonagen oder Paare von Kartonagen können gleichzeitig in einer Richtung parallel zu der oder den Schwenkachsen gesehen, nebeneinander zu liegenden Gefachen und/oder Umverpackungen aufgezogen und anschließend zu stehend angeordneten Gefachen und/oder Umverpackungen aufgerichtet werden.

Es ist ersichtlich, dass die Anlage und/oder das Verfahren zum Aufziehen und Aufrichten von zusammengelegten oder zusammengefalteten Kartonagen zu stehend angeordneten Gefachen und/oder Umverpackungen verwirklicht sein kann durch ein Aufrichten zuvor aus liegenden Kartonagen aufgezogener Gefache und/oder Umverpackungen durch ein auch nach dem Loslassen deren vormals oberen Flachseiten der Kartonagen zugeordneten Kartonagewänden weiterhin stattfindendes Festhalten der aufgezogenen Gefache und/oder Umverpackungen an deren vormals unteren Flachseiten der Kartonagen zugeordneten Kartonagewänden und anschließendes Verschwenken um 90° um eine horizontale Schwenkachse einer die Gefache und/oder Umverpackungen an deren vormals unteren Flachseiten der Kartonagen zugeordneten Kartonagewänden weiterhin festhaltenden Aufrichteinrichtung.

Die Anlage kann alternativ oder zusätzlich einzelne oder eine Kombination mehrerer zuvor in Verbindung mit dem Verfahren zum Aufziehen und Aufrichten von zusammengelegten oder zusammengefalteten Kartonagen zu stehend angeordneten Gefachen und/oder Umverpackungen beschriebene Merkmale aufweisen, ebenso wie das Verfahren zum Aufziehen und Aufrichten von zusammengelegten oder zusammengefalteten Kartonagen zu stehend angeordneten Gefachen und/oder Umverpackungen alternativ oder zusätzlich einzelne oder eine Kombination mehrerer zuvor in Verbindung mit der Anlage beschriebene Merkmale aufweisen kann.

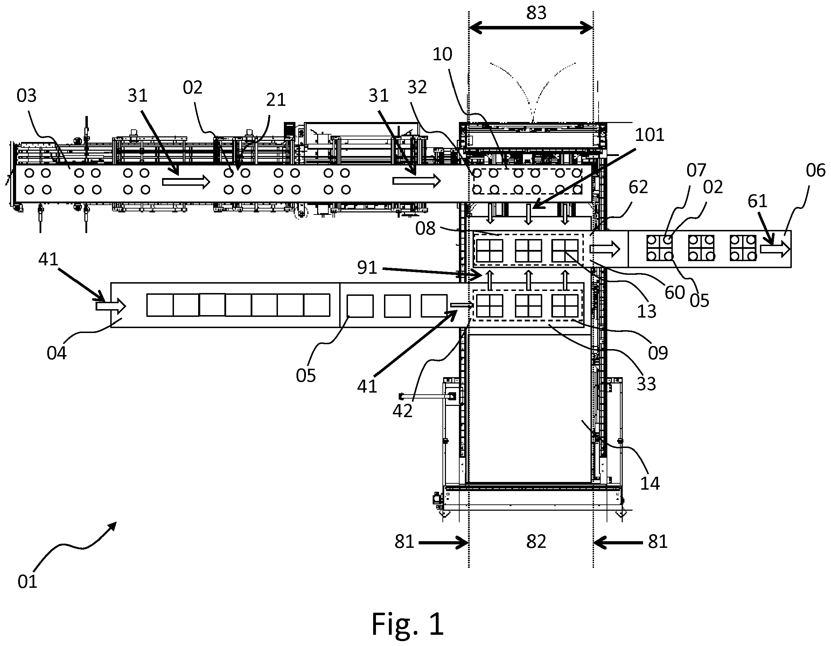

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Die einzige Fig. 1 zeigt in schematischer Darstellung:
eine erfindungsgemäße Vorrichtung zum Umgang mit Artikeln in einer Draufsicht.

Eine in Fig. 1 ganz oder in Teilen dargestellte Vorrichtung 01 zum Umgang mit Artikeln 02 umfasst:
- ein erstes Fördermittel 03 zur Zufuhr von Artikeln 02,
- ein zweites Fördermittel 04 zur Zufuhr von Umverpackungen 05,
- ein drittes Fördermittel 06 zum Abtransport von kurz als Umverpackstücke 07 bezeichneten Umverpackungen 05 mit in diese eingesetzten Artikeln 02, und
- eine zwischen dem ersten Fördermittel 04 und dem zweiten Fördermittel 06 angeordnete, durch einen Abschnitt 62, vorzugsweise einen Anfangsabschnitt 60, des dritten Fördermittels 06 gebildete, gestrichelt dargestellte Einsetzfläche 08, sowie
- eine gestrichelt dargestellte Transfereinrichtung 09 zum durch Pfeile 91 angedeuteten Transfer zugeführter Umverpackungen 05 von dem zweiten Fördermittel 04 zur Einsetzfläche 08, und
- eine gestrichelt dargestellte Umsetzeinrichtung 10 zum durch Pfeile 101 angedeuteten Umsetzen von Artikeln 02 von dem ersten Fördermittel 03 in auf die Einsetzfläche 08 transferierte Umverpackungen 05.

Die Umsetzeinrichtung 10 zum durch Pfeile 101 angedeuteten Umsetzen von Artikeln 02 erfasst zunächst vermittels des ersten Fördermittels 03 bereitgestellte Artikel 02, setzt die erfassten Artikel 02 anschließend von dem ersten Fördermittel 03 zur Einsetzfläche 08 um und setzt dabei die von ihr erfassten und von dem ersten Fördermittel 03 zur Einsetzfläche 08 umgesetzten Artikel 02 in die auf die Einsetzfläche 08 transferierte Umverpackungen 05 ein.

Die Transfereinrichtung 09 zum Transfer zugeführter Umverpackungen 05 von dem zweiten Fördermittel 04 zur Einsetzfläche 08 ist unabhängig von der Umsetzeinrichtung 10 zum Umsetzen von Artikeln 02 von dem ersten Fördermittel 03 in auf die Einsetzfläche 08 transferierte Umverpackungen 05 ausgebildet und betreibbar.

Durch die Einsetzfläche 08 in Verbindung mit der von der Umsetzeinrichtung 10 zum Umsetzen von Artikeln 02 von dem ersten Fördermittel 03 in auf die Einsetzfläche 08 transferierte Umverpackungen 05 unabhängigen Transfereinrichtung 09 wird eine Leistungssteigerung hinsichtlich der erzielbaren Taktung ausgehend von einer Vorrichtung ohne durch einen Abschnitt 62, vorzugsweise einen Anfangsabschnitt 60, des dritten Fördermittels 06 gebildete Einsetzfläche 08 erhalten.

Die höhere Taktung wird erzielt, da durch die Einsetzfläche 08 in Verbindung mit der von der Umsetzeinrichtung 10 unabhängigen Transfereinrichtung 09 in einem ersten Takt vermittels des ersten Fördermittels 03 zugeführte Artikel 02 von der Umsetzeinrichtung 10 erfasst werden können und die Umsetzeinrichtung 10 mit dem Umsetzen der erfassten Artikel 02 durch Start einer Bewegung der erfassten Artikel 02 von dem ersten Fördermittel 03 zur Einsetzfläche 08 beginnen kann, während gleichzeitig noch leere Umverpackungen 05 von einem Abschnitt, vorzugsweise einem beispielsweise durch einen Endanschlag in durch Pfeile 41 angedeuteter Transportrichtung des zweiten Fördermittels 04 begrenzten Endabschnitt 33 des zweiten Fördermittels 04 zur durch einen Abschnitt, vorzugsweise einen Anfangsabschnitt 60 des dritten Fördermittels 06 gebildeten, zwischen dem ersten Fördermittel 03 und dem zweiten Fördermittel 04 angeordneten Einsetzfläche 08 transferiert, beispielsweise übergeschoben werden, und in einem zweiten Takt neue, leere Umverpackungen 05 dem Endabschnitt 33 des zweiten Fördermittels 04 zugeführt werden können, während im zweiten Takt gleichzeitig das Umsetzen von im ersten Takt erfassten Artikeln 02 abgeschlossen wird, indem Artikel 02 in die auf der Einsetzfläche 08 bereitstehende Umverpackungen 05 eingesetzt werden.

Im zweiten Takt wird das Umsetzen der im ersten Takt erfassten Artikel 02 beendet, indem von der Umsetzeinrichtung 10 erfasste Artikel 02 in die im ersten Takt auf die Einsetzfläche 08 transferierte, beispielsweise übergeschobene, leere Umverpackungen 05 eingesetzt werden, und mit einer Rückführung der Umsetzeinrichtung 10 von der Einsetzfläche 08 zum ersten Fördermittel 03 zumindest begonnen wird, um erneut vom ersten Fördermittel 03 zugeführte Artikel 02 zu erfassen und umzusetzen.

In einem dritten Takt schließlich wird die Rückführung der Umsetzeinrichtung 10 von der Einsetzfläche 08 zum ersten Fördermittel 03 abgeschlossen. Darüber hinaus erfolgt im dritten Takt, nachdem die Umsetzeinrichtung 10 den Kollisionsbereich mit dem mindestens einen auf der Einsetzfläche 08 stehenden Umverpackungsstück 07 bestehend aus mindestens einer auf der Einsetzfläche 08 stehenden Umverpackung 05 mit in diese eingesetzten Artikeln 02 verlassen hat, der Abtransport des mindestens einen Umverpackungsstücks 07 von der Einsetzfläche 08, indem das dritte Fördermittel 06 zumindest so lange betrieben wird, bis das mindestens eine auf der Einsetzfläche 08 befindliche Umverpackungsstück 07 bestehend aus mindestens einer zuvor auf der Einsetzfläche 08 mit Artikeln 02 versehenen Umverpackung 05 die Einsetzfläche 08 verlassen hat.

An den dritten Takt anschließend folgt zyklisch wiederkehrend wieder ein erster Takt, gefolgt von einem zweiten Takt.

Die Vorrichtung 01 erlaubt die Durchführung eines Verfahrens zum Umgang mit Artikeln 02, welches bevorzugt vorsieht, in einem oder in mehreren Artikelströmen aus geschlossen und/oder lückenhaft hintereinander gereiht und/oder gruppiert in einer durch Pfeile 31 angedeuteten Transportrichtung zugeführte Artikel 02 in auf einer Einsetzfläche 08 bereitstehende Umverpackungen 05 einzusetzen, welche Umverpackungen 05 wiederum selbst unabhängig von den Artikeln 02 vermittels des zweiten Fördermittels 04 in einer durch Pfeile 41 angedeuteten Transportrichtung zugeführt und einzeln oder gruppenweise durch Pfeile 91 dargestellt quer zu der durch Pfeile 41 angedeuteten Transportrichtung auf die Einsetzfläche 08 transferiert werden und von dort aus nach dem durch Pfeile 101 angedeuteten Einsetzen von Artikeln 02 quer zu der durch Pfeile 31 angedeuteten Transportrichtung - nunmehr als Umverpackungsstücke 07 aus Umverpackungen 05 mit in sie eingesetzten Artikeln 02 versehen - unabhängig von der Zufuhr von Artikeln 02 und unabhängig von der Zufuhr von Umverpackungen 05 vermittels des dritten Fördermittels 06 in einer durch Pfeile 61 angedeuteten Transportrichtung des dritten Fördermittels 06 parallel zur Richtung der durch Pfeile 31 angedeuteten Transportrichtung des ersten Fördermittels 03 und/oder zur Richtung der durch Pfeile 41 angedeuteten Transportrichtung des zweiten Fördermittels 04 und/oder entgegengesetzt zu der durch Pfeile 31 angedeuteten Transportrichtung des ersten Fördermittels 03 und/oder zu der durch Pfeile 41 angedeuteten Transportrichtung des zweiten Fördermittels 04 abtransportiert werden.

Sowohl die Vorrichtung 01, als auch das Verfahren können wie nachfolgend ausgeführt weitergebildet sein.

Bevorzugt sind zumindest das zweite Fördermittel 04 und das dritte Fördermittel 06 wenigstens im Bereich der an die Einsetzfläche 08 angrenzenden Partie 42 des zweiten Fördermittels 04 und des die Einsetzfläche 08 bildenden Abschnitts 62 des dritten Fördermittels 06 parallel zueinander angeordnet oder verlaufen zumindest das zweite Fördermittel 04 und das dritte Fördermittel 06 wenigstens im Bereich der an die Einsetzfläche 08 angrenzenden Partie 42 des zweiten Fördermittels 04 und des die Einsetzfläche 08 bildenden Abschnitts 62 des dritten Fördermittels 06 parallel zueinander.

Außerdem können das erste Fördermittel 03 und das zweite Fördermittel 04 sowie das dritte Fördermittel 06 wenigstens im Bereich der an die Einsetzfläche 08 angrenzenden Partie 32 des ersten Fördermittels 03 und der an die Einsetzfläche 08 angrenzenden Partie 42 des zweiten Fördermittels 04 sowie des die Einsetzfläche 08 bildenden Abschnitts 62 des dritten Fördermittels 06 parallel zueinander angeordnet sein oder parallel zueinander verlaufen.

Vorzugsweise sind das erste Fördermittel 03 und das zweite Fördermittel 04 zumindest im Bereich ihrer an die Einsetzfläche 08 angrenzenden Partien 32, 42 entlang der Einsetzfläche 08 parallel zueinander und parallel zu dem die Einsetzfläche 08 bildenden Abschnitt 62 des dritten Fördermittels 06 angeordnet. Bei der Anordnung parallel zueinander verlaufen die durch Pfeile 31, 41, 61 dargestellten Transportrichtungen der Fördermittel 03, 04, 06 zumindest im Bereich ihrer an die Einsetzfläche 08 angrenzenden Partien 32, 42 parallel zueinander und parallel zu dem die Einsetzfläche 08 bildenden Abschnitt 62 des dritten Fördermittels 06.

Bei der Anordnung parallel zueinander verlaufen die durch Pfeile 31, 41, 61 angedeuteten Transportrichtungen der Fördermittel 03, 04, 06 zumindest im zwischen den Pfeilen 81 liegenden Bereich 82 ihrer an die Einsetzfläche 08 angrenzenden Partien 32, 42 beziehungsweise im Bereich des die Einsetzfläche 08 bildenden Abschnitts 62 parallel zueinander. Dies gilt sowohl für in die selbe Richtung verlaufende Transportrichtungen aller Fördermittel 03, 04, 06, als auch für in entgegengesetzte Richtungen verlaufende Transportrichtungen zumindest zweier Fördermittel 03, 04, 06.

Durch die parallele Anordnung überlappen die Partien 32, 42 und der Abschnitt 62 einander im zwischen den Pfeilen 81 liegenden Bereich 82.

Die parallel zueinander angeordneten Partien 32, 42 der Fördermittel 03, 04 und der Abschnitt 62 des Fördermittels 06 können einander um eine durch den Doppelpfeil 83 angedeutete Strecke der Länge von wenigstens zwei, vorzugsweise mindestens drei auf der Einsetzfläche 08 bereitstehenden Umverpackungen 05 überlappen.

Hierdurch können gleichzeitig zwei oder mehr Umverpackungen 05 vom zweiten Fördermittel 04 auf die Einsetzfläche 08 sowie zwei oder mehr Umverpackstücken 07 von der Einsetzfläche 08 auf das dritte Fördermittel 06 transferiert werden und ebenso gleichzeitig Artikel 02 in die mehreren, dadurch auf der Einsetzfläche 08 bereitgestellten Umverpackungen 05 eingesetzt werden. Hierdurch kann die Taktung nochmals erhöht werden.

Der durch Pfeile 91 angedeutete Transfer zugeführter Umverpackungen 05 von dem zweiten Fördermittel 04 zur Einsetzfläche 08 kann durch Überschieben erfolgen.

Das durch Pfeile 101 angedeutete Umsetzen kann durch Greifen der Artikel 02, oder durch über den Rand des ersten Fördermittels 03 Schieben, oder durch leichtes vom ersten Fördermittel 03 Anheben, sowie Absenken der gegriffenen Artikel 02 in auf der Einsetzfläche 08 bereitstehende Umverpackungen 05 erfolgen.

Die von der Transfereinrichtung 09 zum Transfer von leeren Umverpackungen 05 praktizierte, kurz als Transferrichtung bezeichnete und durch Pfeile 91 angedeutete Richtung des Transfers von Umverpackungen 05 vom zweiten Fördermittel 04 zur Einsetzfläche 08 in horizontaler Richtung verläuft vorzugsweise quer, bevorzugt orthogonal zur durch Pfeile 41 angedeuteten Transportrichtung des zweiten Fördermittels 04.

Verlaufen die durch Pfeile 41, 61 angedeutete Transportrichtungen des zweiten Fördermittels 04 und des dritten Fördermittels 06 im zwischen den Pfeilen 81 liegenden Bereich 82 parallel zueinander, verläuft damit die durch Pfeile 91 angedeutete Transferrichtung von der Transfereinrichtung 09 zum Transfer von leeren Umverpackungen 05 beim Transfer vom zweiten Fördermittel 04 zur durch einen Abschnitt 62, vorzugsweise einen Anfangsabschnitt 60 des dritten Fördermittels 06 gebildeten Einsetzfläche 08 in horizontaler Richtung vorzugsweise quer, bevorzugt orthogonal zu den durch Pfeile 41 und 61 angedeuteten Transportrichtungen sowohl des zweiten Fördermittels 04, als auch des dritten Fördermittels 06.

Durch die in Bezug auf die durch Pfeile 41 und 61 angedeuteten Transportrichtungen des zweiten Fördermittels 04 und des dritten Fördermittels 06 quer und bevorzugt orthogonale horizontale, durch Pfeile 91 angedeutete Transferrichtung können jeweils gleichzeitig eine oder mehrere leere Umverpackungen 05 von dem zweiten Fördermittel 41 zur Einsetzfläche 08 transferiert werden, wodurch zeitgleich Artikel 02 in mehrere auf der Einsetzfläche 08 abgestellte Umverpackungen 05 eingesetzt werden können. Hierdurch wird die Taktung maßgeblich erhöht.

Beispielsweise kann die Transfereinrichtung 09 zum Transfer von Umverpackungen 05 von dem zweiten Fördermittel 04 auf die Einsetzfläche 08 mindestens einen Schieber umfassen.

Das zweite Fördermittel 04 und die durch einen Abschnitt 62, vorzugsweise einen Anfangsabschnitt 60 des dritten Fördermittels 06 gebildete Einsetzfläche 08 liegen bevorzugt auf einem gemeinsamen, ersten Niveau.

Das erste Fördermittel 03 liegt vorzugsweise auf einem höheren, zweiten Niveau.

Hierdurch kann ein zum Einsetzen von Artikeln 02 in Umverpackungen 05 notwendiger Vertikalhub der Umsetzeinrichtung 10 auf das Wesentliche reduziert werden, wodurch die Taktung nochmals gesteigert werden kann.

Das zweite Niveau kann zumindest um die Höhe einer gegebenenfalls zunächst offenen und nach dem Einsetzen von Artikeln 02 zu schließenden Umverpackung 05 oberhalb des ersten Niveaus liegen.

Stehen von einer als verschließbare Kartonage ausgeführten Umverpackung 05 zu verschließende Laschen nach oben ab, so liegt das zweite Niveau bevorzugt um die in unverschlossenem Zustand aufstehende Höhe der Laschen entsprechend höher oberhalb des ersten Niveaus, als wenn die Umverpackungen 05 beispielsweise durch einen separat bereitgestellten Deckel verschlossen werden.

Das Verschließen der auch als Umverpackungsstücke 07 bezeichneten Umverpackungen 05 mit in diesen eingesetzten Artikeln 02 kann noch auf der Einsetzfläche 08, beispielsweise mit oder im Anschluss an das Einsetzen der Artikel 02 in die Umverpackungen 05, oder in einem separaten Behandlungsschritt beispielsweise im Anschluss oder im weiteren Verlauf des dritten Fördermittels 06 der Vorrichtung 01 zum Umgang mit Artikeln 02 erfolgen.

Beispielsweise können die auch als Umverpackungsstücke 07 bezeichneten Umverpackungen 05 mit in diese eingesetzten Artikeln 02 im weiteren Verlauf des dritten Fördermittels 06 mit Deckeln verschlossen werden.

Vor oder nach dem Einsetzen der Artikel 02 in auf die Einsetzfläche 08 transferierte Umverpackungen 08 können auch als so genannte Baskets bezeichnete Gefache 13 in die Umverpackungen 05 eingesetzt werden, welche den Artikeln 02 innerhalb der Umverpackungen 05 feste Plätze zuweisen und diese dadurch beim Weitertransport der Umverpackungen 05 mit in diese eingesetzten Artikeln 02 bis zur Entnahme der Artikel 02 und deren Verbrauch vor einem Gegeneinanderstoßen und Aneinanderreiben schützen, was ansonsten beispielsweise durch Abwetzungsspuren, etwa von auf den Artikeln 02 beispielsweise in Form von Etiketten aufgebrachten Informationen, und/oder Beschädigungen der Artikel 02 untereinander einen negativen Qualitätseindruck zur Folge haben kann.

Die Gefache 13 können bereits vor dem Transfer der Umverpackungen 05 zur Einsetzfläche 08 in die Umverpackungen 05 eingesetzt sein oder werden, oder die Gefache 13 können noch vor den Artikeln 02 oder gemeinsam mit diesen oder nach dem Einsetzen der Artikel 02 in die Umverpackungen 05 eingebracht werden.

Die Gefache 13 können beispielsweise durch eine gesonderte Einrichtung 14, beispielsweise eine an nachfolgender Stelle beschriebene Anlage zum Aufziehen und Aufrichten von zusammengelegten oder zusammengefalteten Kartonagen zu stehend angeordneten Gefachen und/oder Umverpackungen bereitgestellt werden, welche mehrere Gefache 13 beispielsweise gleichzeitig aufziehen und aufrichten kann.

Das nachträgliche Einbringen von Gefachen 13, insbesondere mit leichten, innerhalb der Umverpackungen 05 mit geringem Kraftaufwand verschiebbaren Artikeln 02, weist den Vorteil einer vereinfachten Platzierung der Artikel 02 in den Umverpackungen 05 einhergehend mit einem verringerten Steuerungsaufwand für die Umsetzeinrichtung 10 auf, da beispielsweise Artikel 02 mit auf deren Aufstandsflächen gegenüberliegend konischem oder ähnlichem Verlauf, wie etwa Getränkeflaschen mit einem sich von oben nach unten zumindest abschnittsweise weitenden Flaschenhals, mit dem Einsetzen der Gefache 13 durch diese innerhalb der Umverpackungen 05 horizontal verschoben werden können.

Die Gefache 13 können beispielsweise noch auf dem zweiten Fördermittel 04, beispielsweise innerhalb eines zwischen den durch die Pfeile 81 liegenden Bereich 82 befindlichen Endabschnitts 33 des zweiten Fördermittels 03 in die Umverpackungen 05 eingebracht werden, oder bereits beispielsweise mit oder im Anschluss an ein Aufrichten der Umverpackungen 05 in diese eingebracht werden oder bereits in einer entsprechenden Kartonage mit eingearbeitet sein, wobei sich die Gefache 13 mit dem Aufrichten der Kartonage innerhalb der Umverpackung 05 entfalten können.

In Verbindung mit dem Einbringen von Gefachen 13 vor oder nach dem Einsetzen von Artikeln 02 in die Umverpackungen 05 kann alternativ eine separate Einbringungsfläche zwischen zweitem Fördermittel 04 und der Einsetzfläche 08 im Falle der Einbringung von Gefachen 13 vor dem Einsetzen der Artikel 02 vorgesehen sein.

Dabei kann eine zusätzliche Einrichtung zum Transfer von mit Gefachen 13 versehenen Umverpackungen 05 von einer solchen Einbringungsfläche zur Einsetzfläche 08 vorgesehen sein, die Teil der Transfereinrichtung 09 oder von dieser umfasst sein kann.

Im weiteren Verlauf des dritten Fördermittels 06 der Vorrichtung 01 zum Umgang mit Artikeln 02 kann ein Stapelplatz vorgesehen sein, an dem beispielsweise als verschlossene Umverpackungen 02 mit in diese eingesetzten Artikeln 02 ausgeführte Umverpackungsstücke 07 zu Stapellagen gruppiert zu einem Stapel aufgestapelt werden, der dann nach Erreichen einer vorgegebenen Stapelhöhe, entsprechend einer vorgegebenen Anzahl von am Stapelplatz übereinander gestapelten Stapellagen abtransportiert wird, um Platz zum Aufstapeln eines neuen Stapels zu schaffen.

Die vermittels des ersten Fördermittels 03 zugeführten Artikel 02 sind bevorzugt bereits beispielsweise zu in jeweils eine Umverpackung 05 einzusetzenden Artikelgruppen 21 geordnet. Die vermittels des ersten Fördermittels 03 zugeführten Artikel 02 können aneinander anstehen oder lückenhaft hintereinander gereiht zugeführt werden. Die vermittels des ersten Fördermittels 03 zugeführten Artikel 02 können in einer oder in mehreren parallel verlaufenden Reihen zugeführt werden. Hierzu können die Artikel 02 über einen geeigneten Zulauf an das erste Fördermittel 03 übergeben werden und nach der Übergabe an das erste Fördermittel 03 in einer oder in mehreren parallel zueinander orientierten Gassen geführt sein.

Die vermittels des ersten Fördermittels 03 zugeführten Artikel 02 bilden demnach einen ein- oder mehrreihigen Artikelstrom aus geschlossen und/oder lückenhaft hintereinander gereihten Artikeln 02.

Die Artikel 02 können entlang eines Zulaufs zum ersten Fördermittel 03 zuvor behandelt worden sein, beispielsweise durch Herstellung eines Behälters und/oder Reinigung einer Außen und/oder Innenfläche und/oder Kühlung und/oder Befüllung und/oder Verschließen, um ohne Anspruch auf Vollständigkeit der Aufzählung nur einige Beispiele zur Behandlung von Artikeln 02 zu nennen, und/oder mit den Artikeln 02 kann entlang eines Zulaufs zum ersten Fördermittel 03 zuvor umgegangen worden sein, beispielsweise durch Abtrennung einer Anzahl von Artikeln 02 von einem oder mehreren Artikelströmen aus unmittelbar hintereinander folgend transportierten Artikeln 02 und/oder Gruppierung einer Anzahl von Artikeln 02 zu Artikelgruppen 21 und/oder Zusammenstellung und Zusammenfassung einer Anzahl von Artikeln 02 zu Gebinden, um ohne Anspruch auf Vollständigkeit der Aufzählung nur einige Beispiele zum Umgang mit Artikeln 02 zu nennen, bevor sie anschließend vermittels der Vorrichtung 01 zum Umgang mit Artikeln 02 in die Umverpackungen 05 eingesetzt werden.

Die Fördermittel 03, 04, 06 umfassen bevorzugt mindestens eine Horizontalfördereinrichtung, wie beispielsweise einen Bandförderer und/oder einen Rollenförderer.

Bei den Umverpackungen 05 handelt es sich bevorzugt um Kartonagen beispielsweise in Form von Kartonschachteln mit oder ohne darin angeordnete oder anordbare, einzelne Artikel 02 voneinander trennende und/oder fern haltende Gefache 13.

Es ist ersichtlich, dass die Erfindung verwirklicht sein kann durch eine Vorrichtung 01 zum Umgang mit Artikeln 02 mit:
- einem ersten, Artikel 02 in einer ersten durch Pfeile 31 angedeuteten Transportrichtung zuführenden Fördermittel 03,
- einem zweiten, Umverpackungen 05 in einer bevorzugt parallel zur ersten, durch Pfeile 31 angedeuteten Transportrichtung gleichgerichtet oder entgegengesetzt verlaufenden zweiten, durch Pfeile 41 angedeuteten Transportrichtung zuführenden Fördermittel 04,
- einem dritten, auch als Umverpackstücke 07 bezeichnete Umverpackungen 05 mit in diese eingesetzen Artikeln 02 in einer bevorzugt parallel zur durch Pfeile 31 angedeuteten ersten und zur durch Pfeile 41 angedeuteten zweiten Transportrichtung gleichgerichtet oder entgegengesetzt verlaufenden, durch einen Pfeil 61 angedeuteten dritten Transportrichtung abtransportierenden Fördermittel 06,
- einer zwischen dem ersten Fördermittel 03 und dem zweiten Fördermittel 04 angeordneten, durch einen Abschnitt 62, vorzugsweise einen Anfangsabschnitt 60, des dritten Fördermittels 06 gebildete Einsetzfläche 08,
- einer Transfereinrichtung 09 zum durch Pfeile 91 angedeuteten Transfer zugeführter Umverpackungen 05 von dem zweiten Fördermittel 04 zur Einsetzfläche 08, und
- einer Umsetzeinrichtung 10 zum durch Pfeile 101 angedeuteten Umsetzen von Artikeln 02 von dem ersten Fördermittel 03 in auf die Einsetzfläche 08 transferierte Umverpackungen 08.

Wichtig ist hervorzuheben, dass die erfindungsgemäße Vorrichtung 01 und das erfindungsgemäße Verfahren zum Umgang mit Artikeln 02 im Gegensatz zu einer Parallelanordnung eines durch ein erstens Fördermittel gebildeten, Artikel bereitstellenden Artikelzulaufs und eines durch ein zweites Fördermittel gebildeten, Umverpackungen bereitstellenden und gleichzeitig durch mit Artikeln versehene Umverpackungen gebildete Umverpackungsstücke abtransportierenden Umverpackungszu- und -ablaufs, durch eine von einem Abschnitt eines dem Umverpackungsstückabtransport dienenden dritten Fördermittels gebildete Einsetzfläche eine höhere Taktung erlaubt. Darüber hinaus sind Verschleiß und Steuerungsaufwand erheblich verringert, da die erfindungsgemäße Vorrichtung 01 und das erfindungsgemäße Verfahren zum Umgang mit Artikeln 02 einen im Vergleich zum Stand der Technik deutlich verstetigten Artikelzulauf und Umverpackungszulauf erlauben. Der verringerte Steuerungsaufwand ergibt sich unter anderem dadurch, dass beim Stand der Technik, bei dem Artikel von einem die Artikel bereitstellenden ersten Fördermittel in Umverpackungen auf einem die Umverpackungen bereitstellenden zweiten Fördermittel eingesetzt werden, sowohl Artikel, als auch Umverpackungen in ihren jeweiligen Zuläufen exakt positioniert und aufeinander abgestimmt zugeführt werden müssen. Eine erfindungsgemäß dazwischen angeordnete Einsetzfläche liefert demgegenüber eine exakte Position der Umverpackungen, in welche dann die Artikel mit verringertem Steuerungsaufwand eingesetzt werden können. Indem die Einsetzfläche erfindungsgemäß durch ein drittes, dem Umverpackungsstückabtransport dienenden Fördermittel gebildet ist, wird darüber hinaus eine Vereinfachung des Materialflusses erhalten, bei dem nur noch das dritte Fördermittel intermittierend betrieben werden muss.

Ebenfalls wichtig ist hervorzuheben, dass durch ein schnelles nach oben weg fahren der Einsetzeinrichtung 10 diese bereits erneut Artikel 02 des durch das ersten Fördermittel 03 gebildeten Zulaufs erfassen kann, während das dritte Fördermittel 06 die Umverpackungsstücke 07 von der Einsetzfläche 08 entfernt. Außerdem kann das zweite Fördermittel 04 bereits weitere Umverpackungen 05 in den zwischen den Pfeilen 81 liegenden Bereich 82 einbringen, während zuvor auf die Einsetzfläche 08 transferierte Umverpackungen 05 mit dem Zulauf entnommenen Artikeln 02 versehen werden. Das erste Fördermittel 03 kann ebenfalls bereits weitere Artikel 02 in den zwischen den Pfeilen 81 liegenden Bereich 82 einbringen, während zuvor auf die Einsetzfläche 08 transferierte Umverpackungen 05 mit dem Zulauf entnommenen Artikeln 02 versehen und Umverpackungsstücke 07 durch Betrieb des dritten Fördermittels 06 von der im Bereich 82 liegenden Einsetzfläche entfernt werden. Zusammengefasst ist hierdurch eine deutlich erhöhte Taktung im Vergleich zu einer zuvor beschriebenen Einrichtung mit nur zwei parallel angeordneten Fördermitteln, eines für den Artikelzulauf und eines sowohl für die Bereitstellung von Umverpackungen, als auch den Abtransport von Umverpackungsstücken.

Wie bereits angedeutet, können die der beschriebenen Vorrichtung zum Umgang mit Artikeln und/oder dem beschriebenen Verfahren zum Umgang mit Artikeln zur Verfügung gestellten Umverpackungen 05 und/oder Gefache 13 vermittels einer nachfolgend beschriebenen Anlage zum Aufziehen und Aufrichten von zusammengelegten oder zusammengefalteten Kartonagen zu stehend angeordneten Gefachen und/oder Umverpackungen bereitgestellt werden, welche ein im Anschluss an die Anlage beschriebenes Verfahren zum Aufziehen und Aufrichten von zusammengelegten oder zusammengefalteten Kartonagen zu stehend angeordneten Gefachen und/oder Umverpackungen ausführt.

Bei stehend angeordneten Gefachen und/oder Umverpackungen liegen die Zugangsöffnungen, durch welche Artikel in die Gefache und/oder Umverpackungen eingebracht werden können, in einer horizontalen Ebene.

Die Anlage weist einen wenigstens einen Stapel liegend übereinander angeordneter, flach zusammengelegter Kartonagen umfassenden Kartonagenvorrat auf.

Die Kartonagen bestehen aus mehreren, untereinander beispielsweise durch Knickkanten und/oder Klebeverbindungen und/oder Steckverbindungen verbundenen Kartonagewänden, die beispielsweise aus bogenförmigem Material ausgeschnitten und/oder ausgestanzt sein können. In zusammengelegtem Zustand bilden jeweils mindestens zwei miteinander verbundene Kartonagewände eine obere und eine untere Flachseite einer flach zusammengelegten Kartonage.

Die Anlage weist ferner eine neben dem Kartonagenvorrat angeordnete Aufrichteinrichtung auf.

Die Anlage weist außerdem eine Greifeinrichtung zur gleichzeitigen Erfassung von jeweils einer obersten Kartonage nach der anderen von jedem Stapel übereinander angeordneter, flach zusammengelegter Kartonagen des Kartonagenvorrats auf.

Die Zahl von Stapeln liegend übereinander angeordneter, flach zusammengelegter Kartonagen des Kartonagevorrats entspricht bevorzugt der Anzahl von jeweils gleichzeitig von der Greifeinrichtung erfassbarer beziehungsweise erfasster Kartonagen.

Die Greifeinrichtung weist je gleichzeitig von ihr erfasster Kartonage mindestens ein Werkzeug auf, mit dem eine zuoberst auf einem Stapel des Kartonagevorrats liegende Kartonage an einer Kartonagewand ihrer oberen Flachseite erfasst und angehoben werden kann.

Um das mindestens eine Werkzeug der Greifeinrichtung zwischen dem Kartonagevorrat und der Aufrichteinrichtung horizontal, und zur Überbrückung von Höhenunterschieden und/oder zum Aufziehen von Kartonagen zu Gefachen und/oder Umverpackungen bevorzugt auch vertikal im Raum bewegen zu können, weist die Greifeinrichtung darüber hinaus mindestens einen Manipulator mit einem zumindest entlang einer Horizontalachse horizontal und bevorzugt auch entlang einer Vertikalachse vertikal beweglichen Manipulatorkopf auf, an dem das mindestens eine Werkzeug der Greifeinrichtung angeordnet ist.

Die Aufrichteinrichtung und der Kartonagevorrat sind in Richtung der Horizontalachse benachbart angeordnet.

Bevorzugt befinden sich zumindest in einer Ausgangsstellung die Aufrichteinrichtung sowie die durch die oberste Kartonage des mindestens einen Stapels Kartonagen gebildete Oberfläche des Kartonagevorrats auf dem selben Niveau.

Besonders bevorzugt befindet sich die durch die oberste Kartonage des mindestens einen Stapels Kartonagen gebildete Oberfläche des Kartonagevorrats auf einem von dem mindestens einen Werkzeug der Aufrichteinrichtung in der Horizontalstellung deren mindestens einen Trägers gebildeten Niveau der Aufrichteinrichtung mindestens um die Höhe eines liegend aufgezogenen Gefaches und/oder Umverpackung höheren Niveau. Hierdurch wird zur Erhöhung der erzielbaren Taktung ein Vertikalhub des Manipulatorkopfs bei einer nach dem Aufziehen einer Kartonage zu einem liegenden Gefache und/oder Umverpackung zum Erfassen der nächsten Kartonagen erforderlichen Rückführungsbewegung von der Aufrichteinrichtung zum Kartonagevorrat eingespart.

Das mindestens eine an dem wenigstens einen Manipulatorkpf angeordnete Werkzeug der Greifeinrichtung ist damit horizontal zwischen dem Kartonagevorrat und der in Richtung der Horizontalachse gesehen neben diesem angeordneten Aufrichteinrichtung hin- und her beweglich, sowie bevorzugt anheb- und absenkbar. Bei dem mindestens einen Manipulator kann es sich beispielsweise um einen mehrachsigen, beispielsweise sechsachsigen Roboterarm oder ein entlang einer horizontalen Achse lateral hin- und her fahrbares, sowie vorzugsweise auch entlang einer vertikalen Achse anheb- und absenkbares Portal oder einen Tri- oder Quadropoden handeln, um nur einige denkbare Manipulatoren aufzuzählen.

Die Aufrichteinrichtung weist mindestens einen um eine horizontale, beispielsweise orthogonal zur Horizontalachse und orthogonal zur Vertikalachse verlaufende Schwenkachse aus einer Horizontalstellung in eine Vertikalstellung und umgekehrt beispielsweise durch abklappen und wieder hochklappen hin- und her schwenkbaren Träger auf.

Die Aufrichteinrichtung weist je gleichzeitig von der Greifeinrichtung erfassbarer beziehungsweise erfasster Kartonage mindestens ein an deren wenigstens einem Träger angeordnetes Werkzeug auf, mit dem in dessen beziehungsweise in deren Horizontalstellung mindestens eine vermittels der Greifeinrichtung auf die Aufrichteinrichtung verbrachte Kartonage an einer Kartonagewand ihrer unteren Flachseite erfasst und festgehalten werden kann, und mit dem nach dem Aufziehen der Kartonagen durch Vergrößerung des Abstands zwischen den Werkzeugen der Greifeinrichtung und der Aufrichteinrichtung entlang der Vertikalachse, beispielsweise durch ein vertikales Anheben des an dem bevorzugt ohnehin vertikal beweglichen Manipulatorkopf angeordneten Werkzeugs der Greifeinrichtung, anschließendem dem Lösen nur des mindestens einen Werkzeugs der Greifeinrichtung die weiterhin von dem mindestens einen Werkzeug der Aufrichteinrichtung festgehaltenen, liegend aufgezogenen Gefache und/oder Umverpackungen durch abklappen des Trägers stehend aufgerichtet werden.

Die Aufrichteinrichtung kann an ihrem mindestens einen Träger eine beispielsweise als eine Faltklappe ausgeführte Einrichtung aufweisen, welche aufgezogene und zumindest bis nach dem Verschwenken des mindestens einen Trägers der Aufrichteinrichtung um dessen horizontale, beispielsweise orthogonal zur Horizontalachse und orthogonal zur Vertikalachse verlaufende Schwenkachse aus einer Horizontalstellung in eine Vertikalstellung aufgerichtete Gefache und/oder Umverpackungen in Form hält und gegebenenfalls vor einem Abrutschen von dem Träger hindert, wenn das mindestens eine Werkzeug der Aufrichteinrichtung ein zumindest von ihm bis zum Ende des Aufziehens festgehaltenes Gefache und/oder Umverpackung freigibt.

Ist die Aufrichteinrichtung vertikal beweglich ausgeführt, kann auf einen vertikal beweglichen Manipulatorkopf verzichtet werden, indem dieser nur Kartonagen vom Kartonagevorrat zur Aufrichteinrichtung horizontal verbringt und die Aufrichteinrichtung durch Absenken nach unten den Abstand zwischen ihren und den Werkzeugen der Greifeinrichtung zum Aufziehen der Kartonagen zu liegenden Gefachen und/oder Umverpackungen vergrößert.

Zusammengefasst bildet die Aufrichteinrichtung zusammen mit der Greifeinrichtung zugleich auch eine Aufzieheinrichtung, welche durch Vergrößerung des Abstandes zwischen einer von mindestens einem Werkzeug der Greifeinrichtung gehaltenen Kartonagewand der oberen Flachseite einer flach zusammengelegten Kartonage und einer von mindestens einem Werkzeug der Aufrichteinrichtung gehaltenen Kartonagewand der unteren Flachseite der flach zusammengelegten Kartonage diese zu einem liegenden Gefache und/oder Umverpackung aufzieht.

Bei liegenden Gefachen und/oder Umverpackungen befinden sich die Zugangsöffnungen durch welche Artikel in die Gefache und/oder Umverpackungen eingebracht werden können, im Gegensatz zu stehend angeordneten Gefachen und/oder Umverpackungen nicht in einer horizontalen, sondern in einer vertikalen Ebene.

Die Anlage kann darüber hinaus eine Steuereinrichtung umfassen, welche wenigstens:
- den mindestens einen Manipulator der Greifeinrichtung so steuert, dass dieser einen zyklischen Bewegungsablauf ausführt, in dessen Verlauf der Manipulator das mindestens eine Werkzeug auf eine Kartonagewand der oberen Flachseite einer zuoberst auf wenigstens einem Stapel des Kartonagevorrats liegenden Kartonage absenkt, wieder anhebt, zur Aufrichteinrichtung verfährt, auf die Aufrichteinrichtung absenkt, wieder anhebt und schließlich wieder über den Kartonagevorrat verfährt,
- das mindestens eine Werkzeug der Greifeinrichtung so steuert, dass dieses nach dem Absenken auf eine Kartonagewand der oberen Flachseite einer zuoberst auf wenigstens einem Stapel des Kartonagevorrats liegenden Kartonage erfasst und festhält, bis das Werkzeug der Greifeinrichtung im Verlauf des zyklischen Bewegungsablaufs wieder von der Aufrichteinrichtung zumindest so weit angehoben worden ist, dass die Kartonage zu einem Gefache und/oder Umverpackung aufgezogen ist,
- den mindestens einen Träger der Aufrichteinrichtung so steuert, dass dieser einen zyklischen Bewegungsablauf ausführt, in dessen Verlauf er um 90° aus der Horizontalen in die Vertikale und wieder zurück um dessen Schwenkachse geschwenkt wird, wobei der Träger spätestens eine Horizontalstellung einnimmt, wenn der mindestens eine Manipulator während seines Bewegungsablaufs das wenigstens eine Werkzeug der Greifeinrichtung auf die Aufrichteinrichtung absenkt oder abgesenkt hat, und die Horizontalstellung so lange beibehält, bis das Werkzeug der Greifeinrichtung im Verlauf des zyklischen Bewegungsablaufs des Manipulators wieder von der Aufrichteinrichtung zumindest so weit angehoben worden ist, dass die Kartonage zu einem Gefache und/oder Umverpackung aufgezogen ist, um hiernach durch Abklappen und/oder Verschwenken um dessen Schwenkachse eine Vertikalstellung einzunehmen, und
- das mindestens eine Werkzeug der Aufrichteinrichtung so steuert, dass dieses nach dem Absenken des mindestens einen Manipulators eine Kartonagewand der unteren Flachseite der wenigstens einen von dem zumindest einen Werkzeug der Greifeinrichtung gehaltenen Kartonage erfasst und zumindest so lange festhält, bis die zu einem Gefache und/oder Umverpackung aufgezogene Kartonage durch Abklappen und/oder Verschwenken des mindestens einen Trägers der Aufrichteinrichtung um 90° um dessen Schwenkachse aus der Horizontalstellung in die Vertikalstellung aufgerichtet worden und zur Übergabe zu deren weiteren Verwendung bereit ist.

Ist die Aufrichteinrichtung mit einer als Faltklappe ausgeführten Einrichtung an ihrem mindestens einen Träger ausgestattet, welche aufgezogene und bis zumindest nach dem Verschwenken des mindestens einen Trägers der Aufrichteinrichtung um dessen horizontale, beispielsweise orthogonal zur Horizontalachse und orthogonal zur Vertikalachse verlaufende Schwenkachse aus einer Horizontalstellung in eine Vertikalstellung aufgerichtete Gefache und/oder Umverpackungen in Form hält und gegebenenfalls vor einem Abrutschen von dem Träger hindert, wenn das mindestens eine Werkzeug der Aufrichteinrichtung ein zumindest von ihm bis zum Ende des Aufziehens festgehaltenes Gefache und/oder Umverpackung freigibt, so kann die Steuereinrichtung zusätzlich diese Faltklappe derart steuern, dass diese spätestens am Ende des Aufziehvorgangs mit Beginn des Verschwenkens des Trägers aus dessen Horizontal- in die Vertikalstellung aufgeklappt wird, so dass am Ende des Aufrichtvorgangs die Faltklappe aufgezogene und aufgerichtete Gefache und/oder Umverpackungen in Form hält und gegebenenfalls beispielsweise von unten her vorzugsweise auch nach dem Loslassen des Werkzeugs der Aufrichteinrichtung so lange stützt, bis die aufgezogenen und aufgerichteten Gefache und/oder Umverpackungen deren Weiterverwendung zugeführt werden. Im Anschluss hieran kann die Steuereinrichtung die Faltklappe dazu veranlassen, wieder in ihre Ausgangsstellung in angeklapptem Zustand zurückzukehren. Das Ab- und Anklappen zumindest eines ein Abrutschen verhindernden Teils der Faltklappe kann gegebenenfalls alternativ oder zusätzlich schwerkraftunterstützt und/oder schwerkraftgesteuert erfolgen.

Abhängig von der Konfiguration der Kartonagen und der aus diesen aufziehbaren Gefache und/oder Umverpackungen kann die Steuereinrichtung den Manipulator dazu veranlassen, dass dieser während des Anhebens des Werkzeugs der Greifeinrichtung zugleich eine parallel und/oder orthogonal zur Horizontalachse verlaufende Horizontalbewegung ausführt, an deren Ende die von einem Werkzeug der Greifeinrichtung erfasste Kartonagenwand der oberen Flachseite einer Kartonage und die von einem Werkzeug der Aufrichteinrichtung erfasste Kartonagenwand der unteren Flachseite einer Kartonage in einer Draufsicht gesehen in horizontaler Richtung deckungsgleich übereinander angeordnet sind, entsprechend zwei gegenüberliegenden Wandungen eines aufgezogenen Gefaches und/oder Umverpackung.

Vorzugsweise sind die Kartonagen jedoch so konfiguriert, dass diese durch bloße Abstandsvergrößerung zwischen den Werkzeugen der Greifeinrichtung und der Aufrichteinrichtung aufgezogen werden können. Dies ist beispielsweise durch einen zieharmonikaartigen Aufbau mit einer geraden Anzahl der die von den Werkzeugen erfassten Kartonagewände an jeweils einer ihrer Schmalseiten miteinander verbindenden Kartonagewände möglich.

Das nach dem Absenken auf die Aufrichteinrichtung erfolgende Anheben kann damit abhängig von der Ausgestaltung der Kartonage ausschließlich in vertikaler Richtung erfolgen.

Um eine möglichst hohe Taktung zu erzielen, kann die Steuereinrichtung vor und nach dem Aufziehen von Kartonagen zu Gefachen und/oder Umverpackungen kombinierte Bewegungen des Manipulators in horizontaler und vertikaler Richtung veranlassen.

Als mindestens ein Werkzeug weist die Greifeinrichtung vorzugsweise je gleichzeitig erfasster Kartonage mindestens eine nach unten gerichtete Saugglocke auf, welche durch Beaufschlagung mit Unterdruck die jeweils zuoberst auf einem Stapel des Kartonagevorrats liegende Kartonage an einer der Kartonagewände ihrer oberen Flachseite durch Unterdruck festzuhalten in der Lage ist.

Eine Saugglocke weist eine nach unten hin offene Manschette aus einem elastischen, luftdichten Material auf, sowie einen nach oben von der Manschette wegführenden Anschluss für eine Unterdruckquelle, wie beispielsweise eine Vakuum- oder Unterdruckpumpe, oder einen mit einer Vakuum- oder Unterdruckpumpe verbundenen Unterdruckspeicher. Vorzugsweise ist zwischen jeder einer Kartonage zugeordneten Saugglocke und der Unterdruckquelle ein steuerbar zu öffnendes und zu schließendes Ventil angeordnet. Wird das Ventil geöffnet, kommuniziert die Unterdruckquelle mit der Saugglocke. Ist die nach unten hin offene Manschette nicht abgedeckt strömt Luft durch die Saugglocke zur Unterdruckquelle, die damit streng genommen eine Senke für die unter Umgebungsdruck stehende Luft darstellt. Ist die nach unten hin offene Manschette durch eine Kartonagenwand versperrt, bildet sich in der Saugglocke Unterdruck aus und die Kartonagewand nebst zugehöriger Kartonage wird festgehalten.

Vorzugsweise weist die Greifeinrichtung je gleichzeitig erfasster Kartonage mindestens vier nach unten gerichtete Saugglocken als Werkzeug auf, welche die jeweils zuoberst auf einem Stapel liegende Kartonage im Bereich der Ecken einer der Kartonagewände ihrer oberen Flachseite durch Unterdruck festhalten können. Dies weist im Vergleich zu nur einer Saugglocke je gleichzeitig erfasster Kartonage den Vorteil höherer Redundanz und zugleich einer höheren Haltekraft auf, die wie bereits erläutert zum Aufziehen der zusammengefalteten Kartonagen benötigt wird.

An dem Manipulator ist die mindestens eine Saugglocke je Stapel des Kartonagevorrats der Greifeinrichtung angeordnet, wodurch diese auf den Kartonagevorrat abgesenkt, mit angesaugter Kartonage wieder angehoben, seitlich zur Aufrichteinrichtung verfahren und auf diese abgesenkt und wieder angehoben, sowie nach Freigabe der dann zu einem Gefache und/oder Umverpackung aufgezogenen Kartonage wieder zurück zum Kartonagevorrat verfahren werden kann.

Vorzugsweise handelt es sich bei diesem mindestens einen Werkzeug der Aufrichteinrichtung beispielsweise ebenfalls um eine oder mehrere Saugglocken.

Der Kartonagenvorrat kann ein einen oder mehrere Stapel beherbergendes, aufrecht stehendes Magazin umfassen, welches von seiner Oberseite aus zur Entnahme von Kartonagen zugänglich ist. das Magazin mehrere Stapel, so sind diese bevorzugt zumindest teilweise voneinander durch Magazintrennwände voneinander getrennt und/oder derart voneinander beabstandet in dem Magazin beherbergt, dass ein Kontakt der einzelnen Kartonagen von in dem Magazin benachbarter Stapel ausgeschlossen ist. Hierdurch wird ein gegenseitiges Verhaken gleichzeitig von mehreren Stapeln des Kartonagevorrats zuoberst abgenommener Kartonagen verhindert und dadurch die Betriebssicherheit der Anlage erhöht.

Vorzugsweise weist der Kartonagevorrat in horizontaler Richtung parallel zur Schwenkachse des mindestens einen Trägers der Aufrichteinrichtung gesehen zwei oder mehr nebeneinander benachbarte Stapel liegend übereinander gestapelter, flach zusammengelegter Kartonagen auf.

Zwei oder mehrere in horizontaler Richtung parallel zur Schwenkachse des mindestens einen Trägers der Aufrichteinrichtung gesehen nebeneinander benachbarte Stapel liegend übereinander gestapelter, flach zusammengelegter Kartonagen des Kartonagevorrats können in horizontaler Richtung orthogonal zur Schwenkachse des mindestens einen Trägers der Aufrichteinrichtung versetzt zueinander angeordnet sein oder parallel zur Schwenkachse des mindestens einen Trägers der Aufrichteinrichtung gesehen miteinander fluchten.

Alternativ oder zusätzlich können in horizontaler Richtung parallel zur Schwenkachse des mindestens einen Trägers der Aufrichteinrichtung gesehen nebeneinander benachbarte Stapel liegend übereinander gestapelter, flach zusammengelegter Kartonagen des Kartonagevorrats relativ zueinander um 90° oder 180° oder 270° verdreht oder spiegelbildlich entsprechend einer Spiegelung an einer zwischen zwei benachbarten Stapeln orthogonal zur Schwenkachse des mindestens einen Trägers der Aufrichteinrichtung verlaufenden Spiegelachse, oder an einem zwischen den benachbarten Stapeln liegenden Spiegelpunkt angeordnet sein.

Bevorzugt weist die Aufrichteinrichtung mindestens zwei um jeweils eine eigene Schwenkachse aus einer Horizontalstellung in eine Vertikalstellung und umgekehrt verschwenkbare Träger auf. Die Schwenkachsen der Träger verlaufen hierbei parallel. In einer horizontalen Richtung orthogonal zu den Schwenkachsen gesehen weist der Kartonagevorrat eine der Anzahl der jeweils um eigene Schwenkachsen schwenkbaren Träger entsprechende Zahl von benachbarten Stapeln liegend übereinander angeordneter, flach zusammengelegter Kartonagen auf.

Besonders bevorzugt weist die Aufrichteinrichtung zwei um jeweils eine eigene Schwenkachse in entgegengesetzten Schwenkrichtungen aus einer Horizontalstellung in eine Vertikalstellung und umgekehrt verschwenkbare Träger auf. Die Schwenkachsen der Träger verlaufen auch hierbei parallel. In einer horizontalen Richtung orthogonal zu den Schwenkachsen gesehen weist der Kartonagevorrat zwei benachbarte Stapel übereinander angeordneter, flach zusammengelegter Kartonagen auf. Die liegend gestapelten Kartonagen eines ersten Stapels der beiden in horizontaler Richtung orthogonal zu den Schwenkachsen gesehen benachbarten Stapel sind hierbei in Bezug auf eine zwischen den beiden Stapeln parallel zu den Schwenkachsen verlaufenden Spiegelachse gesehen vorzugsweise spiegelbildlich zu den ebenfalls liegend gestapelten Kartonagen eines zweiten Stapels der beiden in horizontaler Richtung orthogonal zu den Schwenkachsen gesehen benachbarten Stapel gestapelt.

Sowohl bei gleichen, als auch bei entgegengesetzten Schwenkrichtungen zweier oder mehrerer Träger der Aufrichteinrichtung um deren jeweilige Schwenkachsen können in einer horizontalen Richtung orthogonal zu den Schwenkachsen gesehen benachbarte Stapel liegend übereinander angeordneter, flach zusammengelegter Kartonagen des Kartonagevorrats in Bezug auf eine horizontale, orthogonal zu den Schwenkachsen verlaufende Achse fluchtend oder versetzt zueinander angeordnet sein. Hierdurch kann die Anordnung der Stapel im Kartonagevorrat an die Faltung der Kartonagen angepasst werden, so dass nach dem Aufziehen und Aufrichten von Kartonagen von entsprechend im Kartonagevorrat benachbarten Stapeln zu Gefachen und/oder Umverpackungen in Bezug auf eine horizontale, orthogonal zu den Schwenkachsen verlaufende Achse beispielsweise fluchten oder versetzt zueinander angeordnet sind.

Grundsätzlich denkbar sind auch hier, ähnlich wie bereits zuvor zu entlang der Schwenkachsen gesehen nebeneinander angeordneter Stapel des Kartonagevorrats beschrieben, um 90° oder 180° oder 270° verdreht oder spiegelbildlich entsprechend einer Spiegelung an einer zwischen zwei benachbarten Stapeln orthogonal zur Schwenkachse des mindestens einen Trägers der Aufrichteinrichtung verlaufenden Spiegelachse, oder an einem zwischen den benachbarten Stapeln liegenden Spiegelpunkt relativ zueinander angeordnete, nebeneinander benachbarte Stapel liegend übereinander gestapelter, flach zusammengelegter Kartonagen des Kartonagevorrats.

Endet das Aufrichten versetzt und ist eine fluchtende Anordnung für den weiteren Umgang erforderlich, so ist alternativ denkbar, die Träger der Aufrichteinrichtung parallel zu deren Schwenkachsen relativ zueinander beweglich anzuordnen, um aufgezogene und vermittels verschiedener Träger der Aufrichteinrichtung aufgerichtete Gefache und/oder Umverpackungen in eine miteinander fluchtende Anordnung zu überführen.

Die zwei Träger der Aufrichteinrichtung können jeder oder nur einige in horizontaler Richtung relativ zueinander und/oder gemeinsam miteinander beweglich angeordnet sein, um während deren bevorzugt gleichzeitigen Verschwenkens um deren Schwenkachsen auseinander gefahren werden zu können, um ein Aneinanderstoßen aufgezogener Gefache und/oder Umverpackungen während des Verschwenkens zu verhindern, und/oder um nach dem Erreichen der Vertikalstellung gegeneinander gefahren und/oder parallel zueinander verfahren werden zu können, wodurch eine Gruppierung der aufgezogenen und aufgerichteten Gefache und/oder Umverpackungen erhalten wird. Dadurch ist darüber hinaus eine Anpassung an Gefache und/oder Umverpackungen mit verschiedenen Außenabmessungen möglich.

Ferner ist durch eine horizontale Beweglichkeit des oder der Träger der Aufrichteinrichtung orthogonal zu dessen oder deren Schwenkachsen ein Abstreifen von aufgezogenen und aufgerichteten Gefachen und/oder Umverpackungen möglich, welche nach dem Lösen der Werkzeuge der Aufrichteinrichtung auf an den Trägern der Aufrichteinrichtung angeordneten, beispielsweise als eine Faltklappe je Träger ausgeführte Einrichtungen stehen bleiben, welche aufgezogene und nach dem Verschwenken der Träger der Aufrichteinrichtung um deren horizontale, beispielsweise orthogonal zur Horizontalachse und orthogonal zur Vertikalachse verlaufenden Schwenkachsen aus deren Horizontalstellungen in deren Vertikalstellungen aufgerichtete Gefache und/oder Umverpackungen vor einem Abrutschen von den Trägern hindern, wenn die Werkzeuge der Aufrichteinrichtung zumindest von ihnen bis zum Ende des Aufziehens festgehaltene Gefache und/oder Umverpackungen freigeben.

Die Anlage kann eine Weitergabeeinrichtung umfassen, welche aufgezogene und aufgerichtete Gefache und/oder Umverpackungen von der Aufrichteinrichtung, bevorzugt aus der Vertikalstellung des Trägers der Aufrichteinrichtung übernimmt und deren weiteren Verwendung, beispielsweise durch anschließendes Einsetzen von aufgezogenen und aufgerichteten Gefachen in andernorts bereitgestellte Umverpackungen und/oder dem Einbringen von Artikeln in Gefache und/oder Umverpackungen zuführt.

Die Weitergabeeinrichtung kann ein an einem Manipulator angeordnetes Werkzeug umfassen, welches aufgezogene und aufgerichtete Gefache und/oder Umverpackungen von der Aufrichteinrichtung übernimmt und unter vertikaler und/oder horizontaler Bewegung des Manipulators abtransportiert und beispielsweise einem zweiten Fördermittel einer zuvor beschriebenen Vorrichtung zum Umgang mit Artikeln übergibt.

Alternativ können die nach dem Verschwenken des mindestens einen Trägers der Aufrichteinrichtung stehend aufgerichteten Gefache und/oder Umverpackungen auch einfach durch Lösen des mindestens einen Werkzeugs der Aufrichteinrichtung losgelassen werden und dadurch beispielsweise einem direkt unterhalb der Aufrichteinrichtung hindurchführenden, beispielsweise durch ein zweites Fördermittel einer zuvor beschriebenen Vorrichtung zum Umgang mit Artikeln gebildeten Horizontalförderer übergeben werden. Der vertikale Abstand zwischen einem solchen Horizontalförderer und der Aufrichteinrichtung kann hierbei so eingestellt sein, dass die nach dem Verschwenken des mindestens einen Trägers aus dessen Horizontalstellung in dessen Vertikalstellung stehend aufgerichteten Gefache und/oder Umverpackungen einen kleinstmöglichen Abstand zur Oberfläche des Horizontalförderers einnehmen, diese beispielsweise streifen. Denkbar ist darüber hinaus eine dem Loslassen vorangehende Absetzbewegung der Aufrichteinrichtung in vertikaler Richtung.

Das mindestens eine Werkzeug der Weitergabeeinrichtung kann wenigstens eine Saugglocke umfassen.

Ein von einer zuvor beschriebenen Anlage ausführbares Verfahren zum Aufziehen und Aufrichten von zusammengelegten oder zusammengefalteten Kartonagen zu stehend angeordneten Gefachen und/oder Umverpackungen sieht vor, die oberste Kartonage von einem Stapel übereinander angeordneter, flach zusammengelegter Kartonagen eines Vorrats von Kartonagen an einer Kartonagewand ihrer oberen Flachseite von oben kommend festzuhalten und von dem Stapel abzunehmen.

Das Verfahren zum Aufziehen und Aufrichten von zusammengelegten oder zusammengefalteten Kartonagen zu stehend angeordneten Gefachen und/oder Umverpackungen sieht anschließend vor, die an einer Kartonagewand ihrer oberen Flachseite gehaltene Kartonage auch an einer Kartonagewand ihrer unteren Flachseite von unten her festzuhalten und durch entgegengesetztes Ziehen den vertikalen Abstand zwischen der Kartonagewand, an der die Kartonage an ihrer oberen Flachseite gehalten wird, und der Kartonagewand, an der die Kartonage an ihrer unteren Flachseite gehalten wird so weit zu vergrößern, bis die Kartonage zu einem liegenden Gefache und/oder Umverpackung aufgezogen ist.

Daraufhin sieht das Verfahren zum Aufziehen und Aufrichten von zusammengelegten oder zusammengefalteten Kartonagen zu stehend angeordneten Gefachen und/oder Umverpackungen vor, das aufgezogene Gefache und/oder Umverpackung an seiner vormals der oberen Flachseite der Kartonage zugeordneten Kartonagewand freizugeben.

Schließlich sieht das Verfahren zum Aufziehen und Aufrichten von zusammengelegten oder zusammengefalteten Kartonagen zu stehend angeordneten Gefachen und/oder Umverpackungen vor, das weiterhin an seiner vormals der unteren Flachseite der Kartonage zugeordneten Kartonagewand festgehaltene, liegende, aufgezogene Gefache und/oder Umverpackung um eine horizontale Schwenkachse zu verkippen und im Anschluss hieran das aufgezogene und nunmehr aufgerichtete Gefache und/oder Umverpackung auch an seiner vormals der unteren Flachseite der Kartonage zugeordneten Kartonagewand freizugeben.

Vorzugsweise sieht das Verfahren zum Aufziehen und Aufrichten von zusammengelegten oder zusammengefalteten Kartonagen zu stehend angeordneten Gefachen und/oder Umverpackungen vor, gleichzeitig mehrere Kartonagen wie beschrieben zu Gefachen und/oder Umverpackungen aufzuziehen und aufzurichten.

Dabei können jeweils zwei Kartonagen ein Paar gleichzeitig zu Gefachen und/oder Umverpackungen aufzuziehender und aufzurichtender Kartonagen bilden, welche nach deren Aufziehen zu liegenden Gefachen und/oder Umverpackungen in gleicher oder entgegengesetzter Schwenkrichtung um jeweils eigene, parallel verlaufende, horizontale Schwenkachsen zu stehend angeordneten Gefachen und/oder Umverpackungen aufgerichtet werden.

Die Kartonagen eines Paars gleichzeitig zu Gefachen und/oder Umverpackungen aufzuziehender und aufzurichtender Kartonagen können vor dem Aufziehen fluchtend oder versetzt zueinander angeordnet sein. Alternativ oder zusätzlich können die Kartonagen eines Paars gleichzeitig zu Gefachen und/oder Umverpackungen aufzuziehender und aufzurichtender Kartonagen vor dem Aufziehen um beispielsweise 90°, 180°, 270° zueinander verdreht und/oder spiegelbildlich beispielsweise zu einer Spiegelachse oder einem Spiegelpunkt angeordnet sein.

Die aus einem Paar Kartonagen gleichzeitig aufgezogenen und aufgerichteten Gefache und/oder Umverpackungen können nach dem Aufziehen fluchtend oder versetzt zueinander angeordnet sein. Alternativ oder zusätzlich können die aus einem Paar Kartonagen gleichzeitig aufgezogenen und aufgerichteten Gefache und/oder Umverpackungen nach dem Aufziehen um beispielsweise 90°, 180°, 270° zueinander verdreht und/oder spiegelbildlich beispielsweise zu einer Spiegelachse oder einem Spiegelpunkt angeordnet sein.

Mehrere Kartonagen oder Paare von Kartonagen können gleichzeitig in einer Richtung parallel zu der oder den Schwenkachsen gesehen, nebeneinander zu liegenden Gefachen und/oder Umverpackungen aufgezogen und anschließend zu stehend angeordneten Gefachen und/oder Umverpackungen aufgerichtet werden.

Es ist ersichtlich, dass die Anlage und/oder das Verfahren zum Aufziehen und Aufrichten von zusammengelegten oder zusammengefalteten Kartonagen zu stehend angeordneten Gefachen und/oder Umverpackungen verwirklicht sein kann durch ein Aufrichten zuvor aus liegenden Kartonagen aufgezogener Gefache und/oder Umverpackungen durch ein auch nach dem Loslassen deren vormals oberen Flachseiten der Kartonagen zugeordneten Kartonagewänden weiterhin stattfindendes Festhalten der aufgezogenen Gefache und/oder Umverpackungen an deren vormals unteren Flachseiten der Kartonagen zugeordneten Kartonagewänden und anschließendes Verschwenken um 90° um eine horizontale Schwenkachse einer die Gefache und/oder Umverpackungen an deren vormals unteren Flachseiten der Kartonagen zugeordneten Kartonagewänden weiterhin festhaltenden Aufrichteinrichtung.

Die Anlage kann alternativ oder zusätzlich einzelne oder eine Kombination mehrerer zuvor in Verbindung mit dem Verfahren zum Aufziehen und Aufrichten von zusammengelegten oder zusammengefalteten Kartonagen zu stehend angeordneten Gefachen und/oder Umverpackungen beschriebene Merkmale aufweisen, ebenso wie das Verfahren zum Aufziehen und Aufrichten von zusammengelegten oder zusammengefalteten Kartonagen zu stehend angeordneten Gefachen und/oder Umverpackungen alternativ oder zusätzlich einzelne oder eine Kombination mehrerer zuvor in Verbindung mit der Anlage beschriebene Merkmale aufweisen kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 01: Vorrichtung
- 02: Artikel
- 03: erstes Fördermittel
- 04: zweites Fördermittel
- 05: Umverpackung
- 06: drittes Fördermittel
- 07: Umverpackstück (Umverpackung mit in diese eingesetzten Artikeln)
- 08: Einsetzfläche
- 09: Transfereinrichtung
- 10: Umsetzeinrichtung
- 13: Gefache
- 14: Einrichtung
- 21: Artikelgruppe
- 31: Pfeil
- 32: Partie
- 33: Endabschnitt
- 41: Pfeil
- 42: Partie
- 60: Anfangsabschnitt
- 61: Pfeil
- 62: Abschnitt
- 81: Pfeil
- 82: Bereich
- 83: Doppelpfeil
- 91: Pfeil
- 101: Pfeil

## Patentansprüche

1. Vorrichtung (01) zum Umgang mit Artikeln (02), umfassend:
- ein erstes Fördermittel (03) zur Zufuhr von Artikeln (02),
- ein zweites Fördermittel (04) zur Zufuhr von Umverpackungen (05),
- ein drittes Fördermittel (06) zum Abtransport von Umverpackungen (07) mit in diese eingesetzten Artikeln (02), und
- eine zwischen dem ersten Fördermittel (03) und dem zweiten Fördermittel (04) angeordnete, durch einen Abschnitt (62, 60) des dritten Fördermittels (06) gebildete Einsetzfläche (08), sowie
- eine Transfereinrichtung (09) zum Transfer zugeführter Umverpackungen (05) von dem zweiten Fördermittel (04) zur Einsetzfläche (08), und
- eine Umsetzeinrichtung (10) zum Umsetzen von Artikeln (02) von dem ersten Fördermittel (03) in auf die Einsetzfläche (08) transferierte Umverpackungen (08), **dadurch gekennzeichnet, dass**
- vor oder nach dem Einsetzen der Artikel (02) in auf die Einsetzfläche (08) transferierte Umverpackungen (05) Gefache (13) in die Umverpackungen (05) eingesetzt werden, und dass
- eine separate Einbringungsfläche zwischen zweitem Fördermittel (04) und der Einsetzfläche (08) im Falle der Einbringung von Gefachen (13) vor dem Einsetzen der Artikel (02) vorgesehen ist.

2. Vorrichtung nach Anspruch 1, wobei das dritte Fördermittel (06) und das zweite Fördermittel (04) zumindest im Bereich (82) des die Einsetzfläche (08) bildenden Abschnitts (62, 60) des dritten Fördermittels (06) und einer an die Einsetzfläche (08) angrenzenden Partie (42) des zweiten Fördermittels (04) parallel zueinander angeordnet sind.

3. Vorrichtung nach Anspruch 2, wobei der die Einsetzfläche (08) bildende Abschnitt (62, 60) des dritten Fördermittels (06) und die parallel zu dem Abschnitt (60, 62) angeordnete Partie (42) des zweiten Fördermittels (04) einander um die Länge (83) wenigstens zweier Umverpackungen überlappen.

4. Vorrichtung nach Anspruch 2 oder 3, wobei das erste Fördermittel (03) parallel zum zweiten Fördermittel (04) und zum dritten Fördermittel (06) verläuft.

5. Vorrichtung nach Anspruch 2, 3 oder 4, wobei der die Einsetzfläche (08) bildende Abschnitt (62, 60) des dritten Fördermittels (06) und parallel zueinander sowie parallel zu dem Abschnitt (60, 62) angeordnete Partien (32, 42) des ersten Fördermittels (03) und des zweiten Fördermittels (04) einander um die Länge (83) wenigstens zweier Umverpackungen überlappen.

6. Vorrichtung nach einem der voranstehenden Ansprüche, wobei die von der Transfereinrichtung (09) praktizierte Richtung des Transfers von Umverpackungen (05) vom zweiten Fördermittel (04) zur Einsetzfläche (08) in horizontaler Richtung orthogonal zur Transportrichtung (41) des zweiten Fördermittels (04) verläuft.

7. Vorrichtung nach einem der voranstehenden Ansprüche, wobei die Transfereinrichtung (09) mindestens einen Schieber umfasst.

8. Vorrichtung nach einem der voranstehenden Ansprüche, wobei das zweite Fördermittel (04) und die durch einen Abschnitt (62, 60) des dritten Fördermittels (06) gebildete Einsetzfläche (08) auf einem gemeinsamen, ersten Niveau liegen, und das erste Fördermittel (03) auf einem höheren, zweiten Niveau liegt.

9. Vorrichtung nach Anspruch 8, wobei das zweite Niveau zumindest um die Höhe einer gegebenenfalls zunächst offenen und nach dem Einsetzen von Artikeln (02) zu schließenden Umverpackung (05, 07) oberhalb des ersten Niveaus liegt.

10. Vorrichtung nach einem der voranstehenden Ansprüche, wobei das Verschließen der Umverpackungen (07) mit in diese eingesetzten Artikeln (02) noch auf der Einsetzfläche (08), oder in einem separaten Behandlungsschritt erfolgt.

11. Vorrichtung nach einem der voranstehenden Ansprüche wobei eine zusätzliche Einrichtung zum Transfer von mit Gefachen (13) versehenen Umverpackungen (05) von der Einbringungsfläche zur Einsetzfläche (08) vorgesehen ist.

12. Verfahren zum Umgang mit Artikeln (02), welches vorsieht, in einem oder in mehreren Artikelströmen aus geschlossen und/oder lückenhaft hintereinander gereiht und/oder gruppiert zugeführte Artikel (02) in auf einer Einsetzfläche (08) bereitstehende Umverpackungen (05) einzusetzen, welche wiederum selbst unabhängig von den Artikeln (02) in einer Transportrichtung (41) zugeführt und einzeln oder gruppenweise quer zu der Transportrichtung (41) auf die Einsetzfläche (08) transferiert werden, um von dort aus nach dem Einsetzen von Artikeln (02) unabhängig von der Zufuhr von Artikeln (02) und unabhängig von der Zufuhr von Umverpackungen (05) nunmehr mit in sie eingesetzten Artikeln (02) versehen parallel zu der Transportrichtung (41) in Richtung der Transportrichtung (41) oder entgegengesetzt zu dieser abtransportiert zu werden, **dadurch gekennzeichnet, dass**
- vor oder nach dem Einsetzen der Artikel (02) in auf die Einsetzfläche (08) transferierte Umverpackungen (05) Gefache (13) in die Umverpackungen (05) eingesetzt werden, und dass
- eine separate Einbringungsfläche zwischen zweitem Fördermittel (04) und der Einsetzfläche (08) im Falle der Einbringung von Gefachen (13) vor dem Einsetzen der Artikel (02) vorgesehen ist.

## Claims

1. An apparatus (01) for handling articles (02) comprising:
- a first conveying means (03) for the supply of articles (02);
- a second conveying means (04) for the supply of external packagings (05);
- a third conveying means (06) for the discharge of external packagings (07) with articles (02) placed therein; and
- a placing surface (08) formed by a section (62, 60) of the third conveying means (06) and disposed between the first conveying means (03) and the second conveying means (04); as well as
- a transfer device (09) for the transfer of supplied external packagings (05) from the second conveying means (04) to the placing surface (08); and
- a transposing device (10) for transposing articles (02) from the first conveying means (03) into external packagings (05) having been transferred onto the placing surface (08); **characterised in that**
- compartments (13) are inserted into the external packagings (05) prior to or after placing the articles (02) into external packagings (05) that have been transferred onto the placing surface (08), and **in that**
- a separate introduction surface is provided between the second conveying means (04) and the placing surface (08) in the instance of introducing compartments (13) prior to placing the articles (02).

2. The apparatus as recited in claim 1, wherein the third conveying means (06) and the second conveying means (04) are disposed parallel to each other at least in the area (82) of the section (62, 60) of the third conveying means (06), which section (62, 60) forms the placing surface (08), and of a portion (42) of the second conveying means (04), which portion (42) abuts on the placing surface (08).

3. The apparatus as recited in claim 2, wherein the section (62, 60) of the third conveying means (06), which section (62, 60) forms the placing surface (08), and the portion (42) of the second conveying means (04), which portion (42) is disposed parallel to the section (60, 62), overlap each other by the length (83) of at least two external packagings.

4. The apparatus as recited in claim 2 or 3, wherein the first conveying means (03) runs parallel to the second conveying means (04) and to the third conveying means (06).

5. The apparatus as recited in claim 2, 3, or 4, wherein the section (62, 60) of the third conveying means (06), which section (62, 60) forms the placing surface (08), and portions (32, 42) of the first conveying means (03) and of the second conveying means (04), which portions (32, 42) are disposed parallel to each other as well as parallel to the section (60, 62), overlap each other by the length (83) of at least two external packagings.

6. The apparatus as recited in one of the previous claims, wherein the direction of the transfer of external packagings (05) from the second conveying means (04) to the placing surface (08), with said transfer direction being carried out by the transfer device (09), runs in horizontal direction orthogonal to the transport direction (41) of the second conveying means (04).

7. The apparatus as recited in one of the previous claims, wherein the transfer device (09) comprises at least one slider.

8. The apparatus as recited in one of the previous claims, wherein the second conveying means (04) and the placing surface (08) formed by a section (62, 60) of the third conveying means (06) are located on a common, first level, and the first conveying means (03) is located on a higher, second level.

9. The apparatus as recited in claim 8, wherein the second level is located above the first level by at least the height of an external packaging (05, 07), which is initially open and to be closed after placing the articles (02) therein, as the case may be.

10. The apparatus as recited in one of the previous claims, wherein the closing of the external packagings (07) with articles (02) placed therein is carried out while said external packagings (07) are still on the placing surface (08), or it is carried out in a separate treatment step.

11. The apparatus as recited in one of the previous claims, wherein an additional device is provided for transferring external packagings (05) provided with compartments (13) from the introduction surface to the placing surface (08).

12. A method for handling articles (02), which method provides that articles (02) being supplied in one or in a plurality of article flows with the articles (02) lined up one after the other uninterruptedly and/or with gaps between them and/or grouped are placed into external packagings (05) staged on a placing surface (08), with the external packagings (05) themselves in turn being supplied independently of the articles (02) in a transport direction (41) and being individually or groupwise transferred transversely to the transport direction (41) onto the placing surface (08), in order to be discharged from there after the articles (02) have been placed therein, independently of the supply of articles (02) and independently of the supply of external packagings (05), and now being provided with articles (02) placed therein, parallel to the transport direction (41) in the direction of the transport direction (41) or opposite to it, **characterised in that**
- compartments (13) are inserted into the external packagings (05) prior to or after placing the articles (02) into external packagings (05) that have been transferred onto the placing surface (08), and **in that**
- a separate introduction surface is provided between the second conveying means (04) and the placing surface (08) in the instance of introducing compartments (13) prior to placing the articles (02).

## Revendications

1. Dispositif (01) de manipulation d'articles (02), comprenant:
- un premier moyen de transport (03) destiné à amener des articles (02),
- un deuxième moyen de transport (04) destiné à amener des suremballages (05),
- un troisième moyen de transport (06) destiné à évacuer des suremballages (07) avec des articles (2) insérés dans ceux-ci, et
- une surface d'insertion (08) disposée entre le premier moyen de transport (03) et le deuxième moyen de transport (04) et formée par une section (62, 60) du troisième moyen de transport (06), ainsi qu'
- un dispositif de transfert (09) destiné à transférer des suremballages amenés (05) depuis le deuxième moyen de transport (04) vers la surface d'insertion (08), et
- un dispositif de déplacement (10) destiné à déplacer des articles (02) depuis le premier moyen de transport (03) dans des suremballages (05) transférés sur la surface d'insertion (08), **caractérisé par le fait que**,
- avant ou après que les articles (02) soient/sont insérés dans des suremballages (05) transférés sur la surface d'insertion (08), des croisillons (13) sont insérés dans les suremballages (05), et qu'
- une surface d'introduction séparée est prévue entre le deuxième moyen de transport (04) et la surface d'insertion (08) au cas où des croisillons (13) seraient introduits avant que les articles (02) soient insérés.

2. Dispositif selon la revendication 1, dans lequel le troisième moyen de transport (06) et le deuxième moyen de transport (04) sont disposés parallèlement l'un à l'autre au moins dans la zone (82) de la section (62, 60) du troisième moyen de transport (06) laquelle forme la surface d'insertion (08) et d'une partie (42) du deuxième moyen de transport (04) qui est contiguë à la surface d'insertion (08).

3. Dispositif selon la revendication 2, dans lequel la section (62, 60) du troisième moyen de transport (06) laquelle forme la surface d'insertion (08) et la partie (42) du deuxième moyen de transport (04) qui est disposée parallèlement à ladite section (60, 62) se chevauchent l'une l'autre de la longueur (83) d'au moins deux suremballages.

4. Dispositif selon la revendication 2 ou 3, dans lequel le premier moyen de transport (03) s'étend parallèlement au deuxième moyen de transport (04) et au troisième moyen de transport (06).

5. Dispositif selon la revendication 2, 3 ou 4, dans lequel la section (62, 60) du troisième moyen de transport (06) laquelle forme la surface d'insertion (08) ainsi que des parties (32, 42) du premier moyen de transport (03) et du deuxième moyen de transport (04) qui sont disposées parallèlement entre elles et parallèlement à ladite section (60, 62) se chevauchent les unes les autres de la longueur (83) d'au moins deux suremballages.

6. Dispositif selon l'une quelconque des revendications précédentes, dans lequel la direction, pratiquée par le dispositif de transfert (09), du transfert de suremballages (05) depuis le deuxième moyen de transport (04) vers la surface d'insertion (08) s'étend dans la direction horizontale de manière orthogonale à la direction de transport (41) du deuxième moyen de transport (04).

7. Dispositif selon l'une quelconque des revendications précédentes, dans lequel le dispositif de transfert (09) comprend au moins un coulisseau.

8. Dispositif selon l'une quelconque des revendications précédentes, dans lequel le deuxième moyen de transport (04) et la surface d'insertion (08) formée par une section (62, 60) du troisième moyen de transport (06) se trouvent à un premier niveau commun, et le premier moyen de transport (03) est situé à un deuxième niveau plus haut.

9. Dispositif selon la revendication 8, dans lequel le deuxième niveau est situé au-dessus du premier niveau au moins de la hauteur d'un suremballage (05, 07) qui, le cas échéant, est d'abord ouvert et qui est à fermer après avoir inséré des articles (02).

10. Dispositif selon l'une quelconque des revendications précédentes, dans lequel la fermeture des suremballages (07) avec des articles (02) insérés dans ceux-ci se fait encore sur la surface d'insertion (08) ou dans une étape de traitement séparée.

11. Dispositif selon l'une quelconque des revendications précédentes, dans lequel on prévoit un dispositif supplémentaire destiné à transférer des suremballages (05) munis de croisillons (13) depuis la surface d'introduction vers la surface d'insertion (08).

12. Procédé de manipulation d'articles (02) qui prévoit d'insérer, dans des suremballages (05) présents sur une surface d'insertion (08), des articles (02) amenés dans un ou plusieurs flux d'articles, les uns derrière les autres sans lacunes et/ou avec lacunes et/ou de manière groupée, lesquels suremballages (05) mêmes sont amenés indépendamment des articles (02) dans une direction de transport (41) et sont transférés sur ladite surface d'insertion (08) soit individuellement soit par groupes transversalement à la direction de transport (41) afin d'être évacués de là, après l'insertion d'articles (02), indépendamment de l'amenée d'articles (02) et indépendamment de l'amenée de suremballages (05), maintenant munis d'articles (02) insérés dans ceux-ci, de manière parallèle à la direction de transport (41) dans le sens de la direction de transport (41) ou de manière opposée à celle-ci, **caractérisé par le fait que**,
- avant ou après que les articles (02) soient/sont insérés dans des suremballages (05) transférés sur la surface d'insertion (08), des croisillons (13) sont insérés dans les suremballages (05), et qu'
- une surface d'introduction séparée est prévue entre le deuxième moyen de transport (04) et la surface d'insertion (08) au cas où des croisillons (13) seraient introduits avant que les articles (02) soient insérés.
